# EUROPEAN PATENT APPLICATION

(11) **EP 4 513 638 A1**
(43) Date of publication of application: **26.02.2025**
(21) Application number: 23899715.9
(22) Date of filing: 14.11.2023
(51) Int. Cl.: H01M 50/109

(54) **BATTERY AND ELECTRONIC DEVICE**

(30) Priority: 09.12.2022 CN 202223306511 U; 09.12.2022 CN 202223316356 U; 09.12.2022 CN 202223305864 U
(71) Applicant: Zhuhai CosMX Battery Co., Ltd., Zhuhai, Guangdong 519180 (CN)
(72) Inventor: ZHOU, Jinyong, Zhuhai, Guangdong 519180 (CN); XIE, Jichun, Zhuhai, Guangdong 519180 (CN); XI, Yang, Zhuhai, Guangdong 519180 (CN); WEI, Zhida, Zhuhai, Guangdong 519180 (CN)
(74) Representative: Vossius & Partner Patentanwälte Rechtsanwälte mbB
(86) International application number: PCT/CN2023/131644
(87) International publication number: WO 2024/120135

(57) **Abstract**

A battery and an electronic device, relating to the field of battery technology. The battery includes a battery body (100), a first electrode adapter sheet (200) and a second electrode adapter sheet (300); the first electrode adapter sheet and the second electrode adapter sheet are disposed spaced apart at the same end of the battery body (100); the first electrode adapter sheet (200) includes a first input end (210) and a first output end (220) connected to the first input end (210); the second electrode adapter sheet (300) includes a second input end (310) and a second output end (320) connected to the second input end (310); one of the first input end (210) and the second input end (310) is connected to a positive electrode of the battery body (100), and the other of the first input end (210) and the second input end (310) is connected to a negative electrode of the battery body (100); both the first output end (220) and the second output end (320) extend to a direction facing away from an end face of the battery body (100). In the battery, the first electrode adapter sheet (200) and the second electrode adapter sheet (300) are located at the same end of the battery body (100), and the first output end (220) and the second output end (320) extend to the direction facing away from the end of the battery body (100), which is beneficial for improving the assembly compactness between a side wall of the battery body (100) and a battery compartment, thereby reducing the space occupied by the battery.

## Description

The present application claims priority to Chinese Patent Application No. 202223306511.5, entitled with "BATTERY AND ELECTRONIC DEVICE", Chinese Patent Application No. 202223316356.5, entitled with "BUTTON BATTERY", and Chinese Patent Application No. 202223305864.3, entitled with "BATTERY AND ELECTRONIC DEVICE", filed with China National Intellectual Property Administration on December 9, 2022, the disclosures of which are incorporated in the present application by reference in their entireties.

### TECHNICAL FIELD

The present application relates to the field of battery technology, and in particular, to a battery and an electronic device.

### BACKGROUND

Batteries are common electrochemical energy storage devices, widely used to store and provide electrical energy for electronic products. Exemplary, button batteries are often used in wearable electronic products. With the development of electronic products to miniaturization and thinness, there are increasing requirements for the assembly between a battery and a battery compartment of an electronic device. For some electronic products, it is necessary to use an adapter sheet to connect a positive electrode and a negative electrode of the battery to facilitate the connection with a circuit in an electronic product.

In related technologies, in order to facilitate the installation of a battery adapter sheet, pins protruding from the battery adapter sheet are located at a side wall of a battery, that is, a positive pin and a negative pin are pins protruding away from the side wall of the battery.

However, the above solution is not conducive to the miniaturization design of batteries and electronic products having the batteries.

### SUMMARY

The present application provides a battery and an electronic device for solving the problem in the related technologies that battery pins are disposed at a side wall of a battery to occupy a large space, thereby facilitating the miniaturization of the battery and the electronic device having the battery.

On the one hand, the present application provides a battery, including a battery body, a first electrode adapter sheet and a second electrode adapter sheet. The first electrode adapter sheet and the second electrode adapter sheet are disposed spaced apart at a same end of the battery body. The first electrode adapter sheet includes a first input end and a first output end connected to a first input end; the second electrode adapter sheet includes a second input end and a second output end connected to a second input end. One of the first input end and the second input end is connected to a positive electrode of the battery body, and the other of the first input end and the second input end is connected to a negative electrode of the battery body. The first output end and the second output end extend to a direction facing away from an end face of the battery body.

In the battery provided above, the first electrode adapter sheet and the second electrode adapter sheet are all located at the same end of the battery body, thus avoiding the first electrode adapter sheet and the second electrode adapter sheet from increasing the size relative to the side wall of the battery. In addition, in the process of mounting the battery to a battery compartment of an electronic device along the axis direction of the battery, there is no need to reserve a space between the side wall of the battery and the battery compartment to accommodate the positive output end and negative output end of the battery. This is thus beneficial for improving the compactness of the assembly of the battery and the battery compartment of the electronic device. Therefore, the above embodiment is beneficial for reducing the space occupied by the battery.

In some optional implementations, the first output end is disposed parallel to the second output end. In this way, it is convenient to connect the first output end and the second output end to a circuit of the electronic device.

In some optional implementations, the first output end and the second output end are perpendicular to the end face of the battery body. In this way, it is convenient to insert the first output end and the second output end into holes in a circuit board of the electronic device, this is thus beneficial for reducing a gap between the battery body and the circuit board, and reducing the space occupied by the battery.

In some optional implementations, an angle between an extension face of the first output end and the first input end is in a range of 80-120°; and/or, an angle between an extension face of the second output end and the second input end is in a range of 80-120°.

In some optional implementations, a height of the first output end protruding away from the end face of the battery body is the same as a height of the second output end protruding away from the end face of the battery body. In this way, this is beneficial for improving the consistency of the structures of the first output end and the second output end, and it is thus convenient for the battery to be mounted on the circuit board in the electronic device.

In some optional implementations, the second electrode adapter sheet further includes a positioning portion, the positioning portion is connected to at least one of the second input end and second output end, and at least part of the positioning portion protrudes away from the side wall of the battery body.

In the battery provided above, at least part of the positioning portion of the second electrode adapter sheet protrudes away from the side wall of the battery body. Therefore, in the process of mounting the battery to the battery compartment along a direction perpendicular to the end face of the battery body, the positioning portion can be avoided from being blocked by the battery body, and the positions of the first output end and the second output end can be determined according to the positioning portion. This is beneficial for reducing the difficulty of alignment between the first output end and the second output end of the battery and the mounting holes in the battery compartment.

In some optional implementations, the positioning portion includes a first sub-portion and a second sub-portion, the first sub-portion extends along the side wall of the cell body. A first end of the first sub-portion is connected to the second input end and/or the second output end, and a second end of the first sub-portion is connected to the second sub-portion. The second sub-portion extends to a direction facing away from the side wall of the battery body and protrudes away from the side wall of the battery body.

In the battery provided above, the first sub-portion extends along the side wall of the battery body. Therefore, the specific position of the second sub-portion at the side wall of the battery body can be set according to the structure of the electronic device applicable to the battery. This is thus beneficial for improving the flexibility of setting the position of the positioning portion.

In some optional implementations, a distance between the second sub-portion and a first end of the battery body is a first distance, and a distance between the second sub-portion and a second end of the battery body is a second distance, and the first distance is greater than the second distance.

In the battery provided above, the first distance is greater than the second distance. In the process of inserting the battery into the battery compartment, the second sub-portion can be made closer to a groove opening of the battery compartment to facilitate the observation of the second sub-portion to implement alignment. In addition, the distance between the second sub-portion and the first end of the battery body is greater than the distance between the second sub-portion and the second end of the battery body. This is beneficial for preventing the second sub-portion from deflecting out of a position-limiting groove of the battery compartment, and improving the alignment accuracy of the battery and the battery compartment.

In some optional implementations, the first output end and second output end are spaced and disposed parallel to the first end of the battery body. A gap between the first output end and the second output end is opposite to the positioning portion. In this way, it is convenient to determine the positions of the first output end and the second output end by the position of the positioning portion, thereby reducing the alignment difficulty of the battery and the battery compartment.

In some optional implementations, the first output end and second output end are symmetrically distributed at both sides of the first plane, respectively. A symmetric plane along the radial direction of the battery body in the positioning portion is a second plane. An angle between the second plane and the first plane is greater than or equal to 0°, and less than or equal to 10°. In this way, it is beneficial for the alignment accuracy of the battery and the electronic device in the process of assembling, thereby reducing the difficulty of assembling the electronic device and the battery.

In some optional implementations, the second plane coincides with the first plane. This is beneficial for improving the alignment accuracy of the battery and the electronic device in the assembling process. In some optional implementations, the battery body includes a shell, a battery cell, a first end cover and a second end cover. The shell has an accommodation groove, and the battery cell is disposed in the accommodation groove. The first end cover and the second end cover are disposed spaced apart at an end of the battery cell facing away from a bottom of the accommodation groove. One of the first end cover and the shell is connected to a positive electrode of the battery cell, the other of the first end cover and the shell is connected to a negative electrode of the battery cell. The second end cover is connected to the shell. The first end cover is connected to the first input end, and the second end cover is connected to the second input end.

In the battery provided above, the first end cover can provide an installation base for the first electrode adapter sheet, and the second end cover can provide an installation base for the second electrode adapter sheet. The second electrode adapter sheet is connected to one of the electrodes of the battery cell through the shell. This is beneficial for reducing the volume of the battery.

In some optional implementations, the battery further includes a first insulating pad, the first output end is located at a side of the second end cover facing away from the battery cell, and the first insulating pad is located between the first electrode adapter sheet and the second end cover.

In the battery provided above, the first insulating pad can be used to separate the first electrode adapter sheet and the second end cover, so that the first output end can be disposed in an area where the second end cover is located. This is thus beneficial for improving the flexibility of setting the position of the first output end.

In some optional implementations, the first output end and the second output end are all located at a side of the first end cover facing away from the battery cell. The side of the first end cover facing away from the battery cell has a first groove, at least part of the first insulating pad is disposed in the first groove, and the second output end is located at a side of the first insulating pad facing away from the battery cell.

Alternatively, the first output end and the second output end are all located at the side of the second end cover facing away from the battery cell. The side of the second end cover facing away from the battery cell has a second groove, at least part of the first insulating pad is disposed in the second groove, and the first output end is located at the side of the first insulating pad facing away from the battery cell.

In the battery provided above, the side of the first end cover facing away from the battery cell is provided with a first groove, and the first insulating pad is disposed in the first groove. This is beneficial for improving the installation stability of the second electrode adapter sheet, and the assembly compactness of the second electrode adapter sheet and other components. Or, the side of the second end cover facing away from the battery cell is provided with a second groove, and the first insulating pad is disposed in the second groove. This is beneficial for improving the installation stability of the first electrode adapter sheet, and the assembly compactness of the first electrode adapter sheet and other components.

In some optional implementations, a side face of the first insulating pad facing away from the battery cell is flush with a groove opening of the second groove. This is beneficial for reducing the height of the battery, thereby increasing the energy density of the battery.

In some optional implementations, the second end cover is arc-shaped, a structure, which is not located at the second groove, of the second end cover forms a boss. A ratio of a central angle of the boss and a central angle of the second groove is 1:1-1:3, so that the second end cover has a sufficient area for connecting the first insulating pad, and has a sufficient area for connecting the second electrode adapter sheet.

In some optional implementations, an end face of the first input end facing away from the battery cell is flush with an end face of the second input end facing away from the battery cell. In this way, the heights of the second input end and the first input end occupying in the battery are partially overlapped so as to avoid the second input end and the first input end from being high and low to occupy more height of the battery, thereby reducing the overall height of the battery.

In other optional embodiments, the second output end is located at the side of the first end cover facing away from the battery cell, and the first insulating pad is located between the second electrode adapter sheet and the first end cover.

In the battery provided above, the first insulating pad can be used to separate the second electrode adapter sheet and the first end cover, so that the second output end can be disposed in the area where the first end cover is located. This is beneficial for improving the flexibility of setting the position of the second output end.

In some optional implementations, a projection of the first output end in its thickness direction is located on the first insulating pad, and/or a projection of the second output end in its thickness direction is located on the first insulating pad.

In some optional implementations, the first output end and the second output end are located at the side of the first end cover facing away from the battery cell. The first electrode adapter sheet further includes a first bending portion and a first connecting portion, the first input end is mounted to be attached to the first end cover, and the first connecting portion is attached to the side of the first insulating pad facing away from the battery cell. A first end of the first connecting portion is connected to the first output end, and a second end of the first connecting portion is connected to the first input end through the first bending portion.

In the battery provided above, by providing the bending portion and the first connecting portion, the first electrode adapter sheet is beneficial for improving the tightness of the attachment of the first electrode adapter sheet to the first end cover and the first insulating pad, and thus improving the assembly compactness of various components of the battery. In addition, by providing the first bending portion, the first electrode adapter sheet is also beneficial for improving the consistency of the heights of the first output end and the second output end protruding away from the section of the battery body.

In other optional implementations, the first output end and the second output end are all located at the side of the second end cover facing away from the battery cell. The second electrode adapter sheet further includes a second bending portion and a second connecting portion. The second input end is mounted to be attached to the second end cover, the second connecting portion is attached to the side of the first insulating pad facing away from the battery cell. A first end of the second connecting portion is connected to the second output end, and a second end of the second connecting portion is connected to the second input end through the second bending portion.

In the battery provided above, by providing the bending portion and the second connecting portion, the second electrode adapter sheet is beneficial for improving the tightness of attachment of the second electrode adapter sheet to the first end cover and the first insulating pad, and thus improving the assembly compactness of various components of the battery. In addition, by providing the second bend portion, the second electrode adapter sheet is also beneficial for improving the consistency of the heights of the second output end and the first output end protruding away from the section of the battery body.

In some optional embodiments, in the case in which the first output end and the second output end are located at the side of the first end cover facing away from the battery cell, the first bending portion abuts against the first insulating pad. This is beneficial for improving the assembly compactness of various components of the battery.

In the case in which the first output end and the second output end are located at the side of the second end cover facing away from the battery cell, the second bending portion abuts against the first insulating pad. This is beneficial for improving the assembly compactness of various components of the battery.

In some optional implementations, the first output end is located at the side of the second end cover facing away from the battery cell. At last part of the side of the first end cover facing away from the battery cell protrudes away from a side face of the second end cover facing away from the battery cell, and is flush with the side, facing away from the second end cover, of the first insulating pad on the second end cover.

In the battery provided above, a height difference between the first end cover and the second end cover can be used to form a gap between the first electrode adapter sheet and the second end cover to accommodate the first insulating pad. This is beneficial for preventing the first electrode adapter sheet from piercing the first insulating pad, and further is beneficial for improving the assembly compactness of various structures in the battery.

In other optional implementations, the second output end is located at the side of the first end cover facing away from the battery cell. At least part of the side of the second end cover facing away from the battery cell protrudes away from a side face of the first end cover facing away from the battery cell, and is flush with the side, facing away from the first end cover, of the first insulating pad on the first end cover.

In the battery provided above, a height difference between the first end cover and the second end cover can be used to form a gap between the second electrode adapter sheet and the first end cover to accommodate the first insulating pad. This is beneficial for preventing the second electrode adapter sheet from piercing the first insulating pad, and further is beneficial for improving the assembly compactness of various structures in the battery.

In some optional implementations, the second end cover has a position-limiting groove, the position-limiting groove is located at a side of the second end cover near the battery cell, and at least part of the shell is located in the position-limiting groove and is in position-limiting fit with the second end cover.

In the battery provided above, in the process of assembling the second end cover and the shell, at least part of the shell can be inserted in the position-limiting groove to achieve the position limitation. This is beneficial for improving the assembly accuracy of the second end cover and the shell, preventing the assembling of the second end cover and the shell from being mismatched, and improving the yield in the battery production process.

In some optional implementations, the battery body further includes a second insulating pad. The second insulating pad and the second end cover are provided with avoidance holes, respectively. The second insulating pad is stacked at a side of the second end cover near the battery cell. The first end cover includes a first cover body portion and a second cover body portion connected to the first cover body portion, the first cover body portion is stacked at a side of the second insulating pad facing away from the second end cover. The second cover body portion is located at a side of the first cover body portion facing away from the battery cell, and the second cover body portion passes through the second insulating pad and the second end cover so as to be connected to the first input end along the avoidance holes of the second insulating pad and the second end cover.

In the battery provided above, the second insulating pad can be used to separate the first end cover and the second end cover. And the first cover body portion is stacked at the side of the second insulating pad facing away from the second end cover, so that the second end cover can be used to prevent the first end cover from falling off. This is beneficial for improving the assembly stability of the first end cover.

In some optional implementations, the battery body further includes a sealing cover, the shell is provided with a liquid injection hole, the liquid injection hole is communicated with the accommodation groove. The sealing cover includes a cover main body portion and a position-limiting portion, and the cover main body portion covers the liquid injection hole, and the cover main body portion is sealedly connected to the shell, and the position-limiting portion is located at a side of the cover main body portion toward the liquid injection hole, and at least part of the position-limiting portion is located in the liquid injection hole.

In the battery provided above, by providing the position-limiting portion, the sealing cover is at least partially inserted into the liquid injection hole by using the position-limiting portion to achieve the position-limiting cooperation between the shell and the sealing cover. This is thus beneficial for preventing the sealing cover from sliding relative to the shell in the process of sealedly assembling the sealing cover and the shell, and improving the accuracy of the assembled sealing cover and shell.

In some optional implementations, the battery further includes a third insulating pad, the third insulating pad is stacked at a side of the first electrode adapter sheet and/or the second electrode adapter sheet facing away from the battery body. This is beneficial for preventing short circuits of the first electrode adapter sheet and the second electrode adapter sheet.

On the other hand, the present application provides an electronic device, including a battery compartment and the battery as described above. Where, the battery compartment has an accommodating space and an opening, the opening is in communication with the accommodating space, the battery is disposed in the accommodating space, and an end of the battery facing away from the first output end and the second output end is opposite to the opening.

The electronic device provided above has the same technical features as the battery provided in the present application, and can achieve the same or similar technical effects, which are not detailed here.

### BRIEF DESCRIPTION OF DRAWINGS

The drawings herein are incorporated into the specification and form part of the specification, show embodiments that comply with the present application, and are used together with the specification to explain the principle of the present application.
FIG. 1 is a first schematic diagram of a battery provided by some optional embodiments of the present application.
FIG. 2 is a schematic exploded diagram of a battery provided by some optional embodiments of the present application.
FIG. 3 is a schematic diagram of the battery of FIG. 1 after an insulating pad on a side wall of the battery is detached.
FIG. 4 is a schematic diagram of the assembling of an electrode adapter sheet and a battery body in the battery of FIG. 1.
FIG. 5 is a schematic diagram of a first insulating pad being disposed at a second end cover provided by some optional embodiments of the present application.
FIG. 6 is a schematic diagram of a first end cover and the second end cover being disposed at an end of a battery cell provided by some optional embodiments of the present application.
FIG. 7 is a schematic diagram of a second insulating pad being disposed at a first end cover provided by some optional embodiments of the present application.
FIG. 8 is a schematic diagram of a first end cover being disposed at an end of a battery cell provided by some optional embodiments of the present application.
FIG. 9 is a diagram of the assembling of a sealing cover and a shell provided by some optional embodiments of the present application.
FIG. 10 is a schematic diagram of a shell being provided with a liquid injection hole provided by some optional embodiments of the present application.
FIG. 11 is a section diagram of a battery provided by some optional embodiments of the present application.
FIG. 12 is a partial enlarged view for an upper broken-line circle in FIG. 10.
FIG. 13 is a partial enlarged view for a lower broken-line circle in FIG. 10.
FIG. 14 is a schematic diagram of a sealing cover provided by some optional embodiments of the present application.
FIG. 15 is a first schematic diagram of a second end cover provided by some optional embodiments of the present application.
FIG. 16 is an exploded diagram of a battery cell provided by some optional embodiments of the present application.
FIG. 17 is a first schematic diagram of a battery cell provided by some optional embodiments of the present application.
FIG. 18 is a second schematic diagram of a battery cell provided by some optional embodiments of the present application.
FIG. 19 is another section diagram of a battery provided by some optional embodiments of the present application.
FIG. 20 is a partial enlarged view for a left broken-line box in FIG. 19.
FIG. 21 is a partial enlarged view for a right broken-line box in FIG. 19.
FIG. 22 is a schematic diagram of a shell provided by some optional embodiments of the present application.
FIG. 23 is a partial enlarged view for a broken-line circle in FIG. 22.
FIG. 24 is a second schematic diagram of a battery provided by some optional embodiments of the present application.
FIG. 25 is a schematic diagram of a battery in FIG. 24 after an insulating pad on a side wall of the battery is detached.
FIG. 26 is a schematic diagram of the assembling of an electrode adapter sheet and a battery body in the battery of FIG. 24.
FIG. 27 is a schematic diagram of a second electrode adapter sheet in the battery of FIG. 24.
FIG. 28 is a schematic diagram of a first electrode adapter sheet in the battery of FIG. 24.
FIG. 29 is a third schematic diagram of a battery provided by some optional embodiments of the present application.
FIG. 30 is a fourth schematic diagram of a battery provided by some optional embodiments of the present application.
FIG. 31 is a fifth schematic diagram of a battery provided by some optional embodiments of the present application.
FIG. 32 is a schematic diagram of a battery compartment provided by some optional embodiments of the present application.
FIG. 33 is a top view of the battery in FIG. 25.
FIG. 34 is a second schematic diagram of a second end cover provided by some optional embodiments of the present application.
FIG. 35 is a top view of the second end cover in FIG. 34.
FIG. 36 is a cross-sectional view of the second end cover along A-A direction in FIG. 35.
FIG. 37 is a first schematic diagram of a second electrode adapter sheet provided by some optional embodiments of the present application.
FIG. 38 is a second schematic diagram of a second electrode adapter sheet provided by some optional embodiments of the present application.

Description of reference numbers:
100-battery body; 110-shell; 111-accommodation slot; 112-liquid injection hole; 120-battery cell; 121-first electrode tab; 122-second electrode tab; 123-fifth insulating pad; 124-sixth insulating pad; 125-battery cell main body; 130-first end cover; 131-first cover body portion; 132-second cover body portion; 140-second end cover; 141-position-limiting groove; 142-avoidance hole; 143-second groove; 144-boss; 150-second insulating pad; 160-sealing cover; 161-cover main body portion; 162-position-limiting portion; 200-first electrode adapter sheet; 210-first input end; 220-first output end; 230-first connecting portion; 300-second electrode adapter sheet; 310-second input end; 320-second output end; 330-positioning portion; 340-second connecting portion; 350-second bending portion; 400-first insulating pad; 500-third insulating pad; 600-fourth insulating pad; 700-battery compartment; 710-mounting groove; 720-positioning groove.

### DESCRIPTION OF EMBODIMENTS

Exemplary embodiments will be illustrated in detail here, examples thereof are shown in the accompanying drawings. When the description below relates to the accompanying drawings, the same numbers in different accompanying drawings represent the same or similar elements unless otherwise indicated. Implementations described in the following exemplary embodiments do not represent all implementations consistent with the present application. In contrast, they are merely examples of devices and methods that are consistent with some aspects of the present application as detailed in the appended claims.

In the related technologies, an adapter sheet of a button battery make a positive-electrode output end and a negative-electrode output end protruded from a side wall of the button battery. When the battery is mounted to some electronic devices, the button battery needs to be vertically mounted, that is, mounted along an axis of the button battery. In order to ensure that the button battery can be successfully placed into a battery compartment of an electronic device, it is necessary to design the battery compartment of the electronic device with a larger size to provide avoidance space for the positive-electrode output end and the negative-electrode output end of the button battery. Therefore, after the button battery is mounted to the battery compartment of the electronic device, there is a gap between the side wall of the button battery and an inner side wall of the battery compartment. This is thus not conducive to the miniaturization design of the electronic device.

As for the above technical problem, embodiments of the present application provide a battery and an electronic device. The battery includes a battery body and two electrode adapter sheets. The two electrode adapter sheets are disposed at the same end of the battery body, and output ends of the two electrode adapter sheets extends away from the end of the battery body. This may avoid the electrode adapter sheets from protruding away from a side wall of the battery body, so that the side wall of the battery body can be attached to an inner side of a battery compartment of an electronic device, that is, a chamber of the electronic device where the battery is accommodated. Therefore, the solution is beneficial for improving the compactness of the assembly of the battery and battery compartment, thereby solving the problem in the related technologies that battery pins are disposed at the side wall of the battery and occupy a large space.

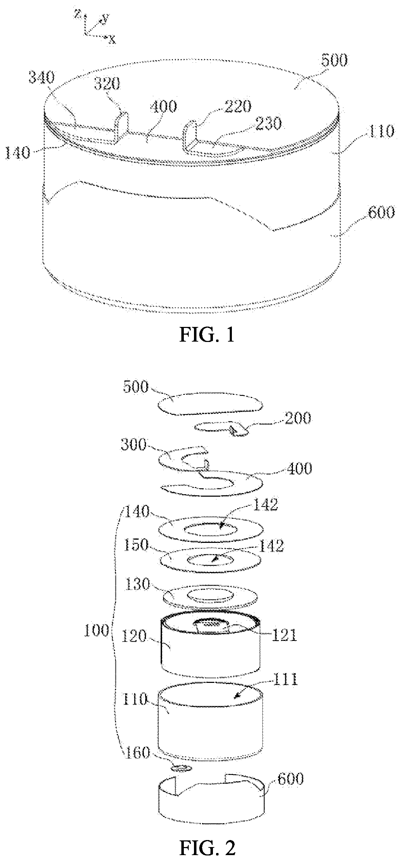

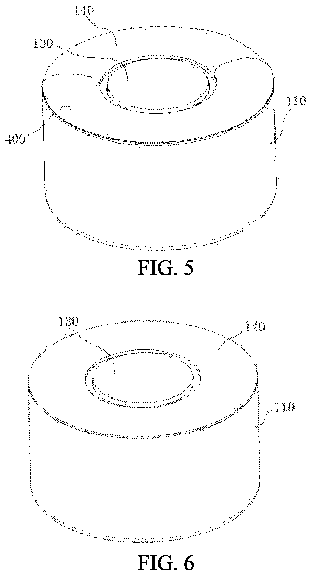

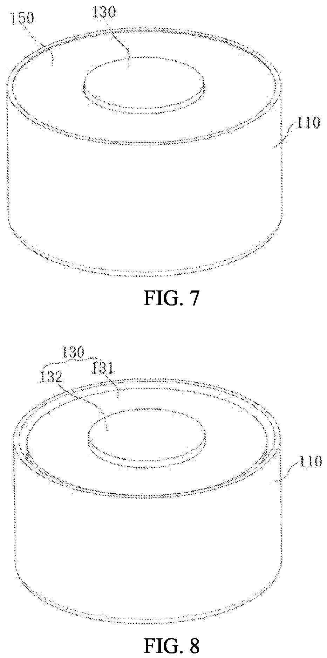

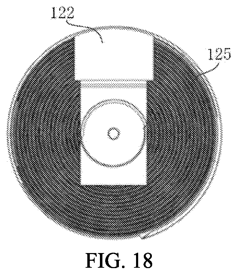

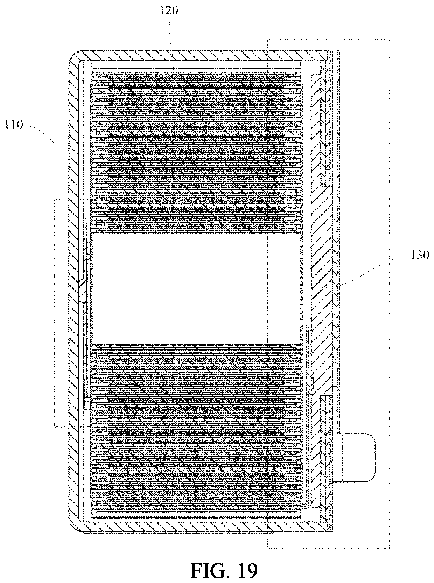

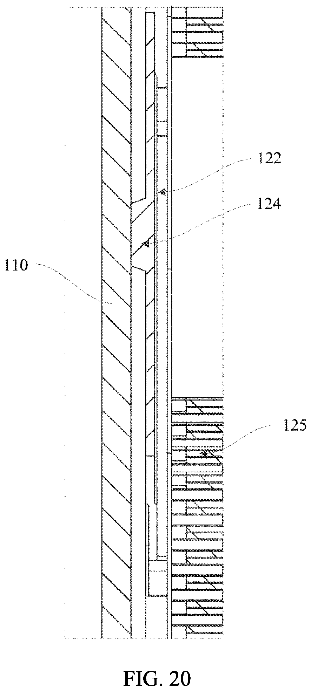

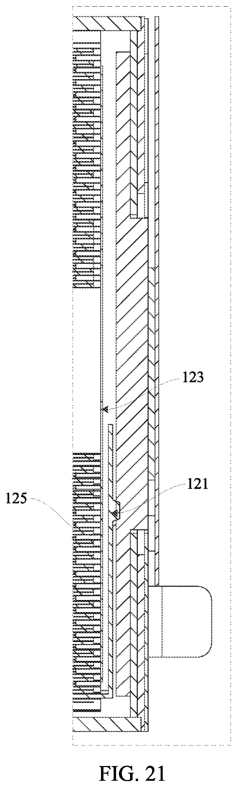

The technical solutions of the present application and how to solve the above technical problems by the technical solutions of the present application are described in detail below with specific embodiments. The specific embodiments below may be combined with each other, and the same or similar concepts or processes may not be repeated in some embodiments. Embodiments of the present application are described below in conjunction with FIGS. 1 to 38.

In some optional embodiments, as shown in FIG. 1, a battery provided in the present application includes a battery body 100, a first electrode adapter sheet 200, and a second electrode adapter sheet 300, where the battery body 100 is a basic structural component that can provide an installation base for other components and can be used to store electrical energy.

Referring to FIGS. 1 to 4, in some optional embodiments, the first electrode adapter sheet 200 and the second electrode adapter sheet 300 are disposed spaced apart at the same end of the battery body 100. This is beneficial for preventing the first electrode adapter sheet 200 and the second electrode adapter sheet 300 from being directly electrically conducted, thereby effectively avoiding short circuit of the first electrode adapter sheet 200 and the second electrode adapter sheet 300.

In some optional embodiments, the battery body 100 is a columnar structure, such as a cylindrical structure or a prismatic structure. Optionally, the first electrode adapter sheet 200 and the second electrode adapter sheet 300 are disposed at the same end of the battery body 100, that is, the first electrode adapter sheet 200 and the second electrode adapter sheet 300 are disposed at an end of the battery body 100 along the axis direction thereof.

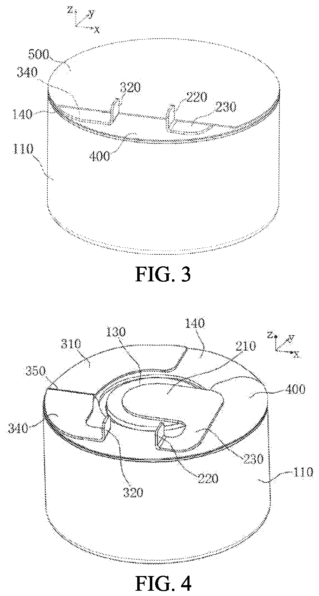

Referring to FIG. 4, in some optional embodiments, the first electrode adapter sheet 200 includes a first input end 210 and a first output end 220 connected to the first input end 210. Where, the first input end 210 is used to be connected with an electrode of the battery body 100, and the first output end 220 is used to be connected with a circuit in an electronic device. Therefore, the communication between one of the electrodes in the battery body 100 and the circuit in the electronic device through the first electrode adapter sheet 200 is achieved.

Referring to FIG. 4, in a further optional embodiment, a second electrode adapter sheet 300 includes a second input end 310 and a second output end 320 connected to the second input end 310. Where, the second input end 310 is used to be connected with an electrode of the battery body 100, and the second output end 320 is used to be connected with a circuit in the electronic device. Therefore, the communication between one of the electrodes in the battery body 100 and the circuit in the electronic device through the second electrode adapter sheet 300 is achieved.

In some optional embodiments, as shown in FIG. 4, one of the first input end 210 and the second input end 310 is connected to a positive electrode of the battery body 100 and the other of the first input end 210 and the second input end 310 is connected to a negative electrode of the battery body 100. The first output end 220 and the second output end 320 extend to a direction facing away from an end face of the battery body 100.

In the above embodiment, the first electrode adapter sheet 200 and the second electrode adapter sheet 300 are located at the same end of the battery body 100, thereby avoiding the stacking of the first electrode adapter sheet 200 and the second electrode adapter sheet 300 in the direction perpendicular to the end face of the battery body 100. This is beneficial for reducing the size of the battery in the direction perpendicular to the end face of the battery body 100, compared with the situation that electrode adapter sheets are respectively disposed at the opposite ends of the battery body 100 in the related technology.

In addition, the first output end 220 of the first electrode adapter sheet 200 and the second output end 320 of the second electrode adapter sheet 300 extend along a direction facing away from the end face of the battery body 100, so that there is no need to dispose the first output end 220 and the second output end 320 at the side wall of the battery body 100. Therefore, in the case that the battery needs to be mounted into the battery compartment of an electronic device along a direction perpendicular to the end face of the battery body 100, there is no need to reserve space in the battery compartment of the electronic device to avoid the first output end 220 and the second output end 320, so that the side wall of the battery body 100 can be attached to the inner side wall of the battery compartment of the electronic device. Therefore, the battery provided by an embodiment is beneficial for improving the compactness of the assembly of the battery and the battery compartment of the electronic device, and is beneficial for educing the space, occupied by the battery, in the electronic device and improving the utilization rate of the internal space of the electronic device. In the case that there is a certain accommodation space of the battery compartment of the electronic device, the solution provided in the above embodiment is beneficial for increasing the volume of the battery. This is beneficial for improving the energy storage performance of the battery, increasing the charge capacity of the battery, and improving the battery endurance.

In some optional embodiments, the battery of the present application may be a button battery.

Referring to FIGS. 2 and 4, in some optional embodiments, the first input end 210 and the second input end 310 can be disposed as sheet structures. Exemplary, the first input end 210 is stacked at a first end of the battery body 100; the second input end 310 is stacked at the first end of the battery body 100, and the second input end 310 and the first input end 210 are disposed spaced apart to avoid short circuit after the first input end 210 and the second input end 310 are electrically conducted.

In some optional embodiments, the first electrode adapter sheet 200 may be connected to the positive electrode of the battery body 100. The second electrode adapter sheet 300 may be connected to the negative electrode of the battery body 100. Exemplary, the first input end 210 is connected to the positive electrode of the battery body 100. The second input end 310 is connected to the negative electrode of the battery body 100.

In other optional embodiments, the first electrode adapter sheet 200 may also be connected to the negative electrode of the battery body 100. The second electrode adapter sheet 300 is connected to the positive electrode of the battery body 100. Exemplary, the second input end 310 is connected to the positive electrode of the battery body 100. The first input end 210 is connected to the negative electrode of the battery body 100.

Referring to FIGS. 1, 3, and 4, in some optional embodiments, the first output end 220 is disposed parallel to the second output end 320. Exemplary, the first output end 220 and the second output end 320 may be electrical connection pin in the form of column shape, and electrical connection pin in the form of sheet shape. The first output end 220 is disposed parallel to the second output end 320, that is, an extension direction of the first output end 220 is parallel to an extension direction of the second output end 320. In a further optional embodiment, an extension face of the first output end 220 and an extension face of the second output end 320 are disposed in parallel. Where, the extension face of the first output end 220 is a face perpendicular to a thickness direction of the first output end 220, and the extension face of the second output end 320 is a face perpendicular to a thickness direction of the second output end 320. In some optional embodiments, the thickness direction of the first output end 220 and the thickness direction of the second output end 320 may be the direction shown by X-axis in FIGS. 1 and 3.

This embodiment is beneficial for maintaining the distance between the first output end 220 and the second output end 320, preventing the short circuit between the first output end 220 and the second output end 320, and improving the reliability of the battery. In addition, in some optional embodiments, in the process of connecting the battery to a circuit board in an electronic device, the first output end 220 and the second output end 320 of the battery need to be passed through two different through-holes in the circuit board respectively and welded to a bonding pad in the circuit board. In this solution, the first output end 220 and the second output end 320 are disposed in parallel. This is beneficial for reducing the difficulty of inserting the first output end 220 and the second output end 320 into the through holes of the circuit board, and is beneficial for reducing the difficulty of assembling the battery and the circuit board.

In some optional embodiments, as shown in FIG. 4, an angle between the extension face of the first output end 220 and the first input end 210 is in a range of 80-120°; and/or, an angle between the extension face of the second output end 320 and the second input end 310 is in a range of 80-120°. This is beneficial for preventing the first output end 220 and the second output end 320 from being deflected relative to the end face of the battery body 100 in the assembly process. In a further optional embodiment, the extension face of the first output end 220 is perpendicular to the first input end 210, the extension face of the second output end 320 is perpendicular to the second input end 310.

In some optional embodiments, the first output end 220 and the second output end 320 are both perpendicular to the end face of the battery body 100. Specifically, in the actual production process, the first output end 220 and the second output end 320 being both perpendicular to the end face of the battery body 100 should be understood as: in the scope of permitted errors, the extension direction of the first output end 220 and the second output end 320 is basically perpendicular to the end face of the battery body 100. In a further optional embodiment, the extension face of the first output end 220 and the extension face of the second output end 320 are perpendicular to the end face of the battery body 100. Exemplary, the first output end 220 and the second output end 320 are located at the first end of the battery body 100. Further optionally, the first output end 220 and the second output end 320 are both perpendicular to the end face of the first end of the battery body 100.

In the battery provided by the above embodiments, the first output end 220 and the second output end 320 are perpendicular to the end face of the battery body 100, that is, the extension direction of the first output end 220 and the second output end 320 is consistent with an assembly direction of assembling the battery to the battery compartment of the electronic device. This is beneficial for preventing the first output end 220 and the second output end 320 from being deflected relative to the end face of the battery body 100 in the assembly process. In addition, in the case where the battery is used to be inserted into a circuit board in some electronic devices, the battery provided by the embodiments is also beneficial for the first output end 220 and the second output end 320 to be inserted into the circuit board in the electronic device, and is also beneficial for the first output end 220 and the second output end 320 to be fully inserted into mounting holes of the circuit board. That is, this is beneficial for reducing the distance between a side, where the first electrode adapter sheet 200 and the second electrode adapter sheet 300 are disposed, of the battery body 100 and a bottom of the battery compartment of the electronic device, and improving the compactness of the assembly of the battery and the electronic device.

Referring to FIG. 1, in some optional embodiments, a height of the first output end 220 protruding away from the end face of the battery body 100 and a height of the second output end 320 protruding away from the end face of the battery body 100 are the same. That is, the first output end 220 and the second output end 320 protrude at equal heights from the end face of the end of the battery body 100 on which they are located.

In the above embodiment, the first output end 220 and the second output end 320 have the same height, this is thus beneficial for ensuring the reliability of the connecting and conducting of the first output end 220 and the second output end 320 with an electronic device. In related technologies, the bottom or top of a battery compartment accommodating a battery is generally disposed as a plane, and in order to facilitate the welding of the first output end 220 and the second output end 320 to a welding pad of an electronic device, the height of the first output end 220 protruding relative to the end face of the battery body 100 and the height of the second output end 320 protruding relative to the end face of the battery body 100 are consistent. This is thus beneficial for improving the reliability of the connection between the first output end 220 and the second output end 320 with the electronic device.

In some optional embodiments, as shown in FIGS. 4 to 6, the battery body 100 includes a shell 110, a battery cell 120, a first end cover 130, and a second end cover 140. Where, the shell 110 is a basic structural component which can provide an installation base for other components.

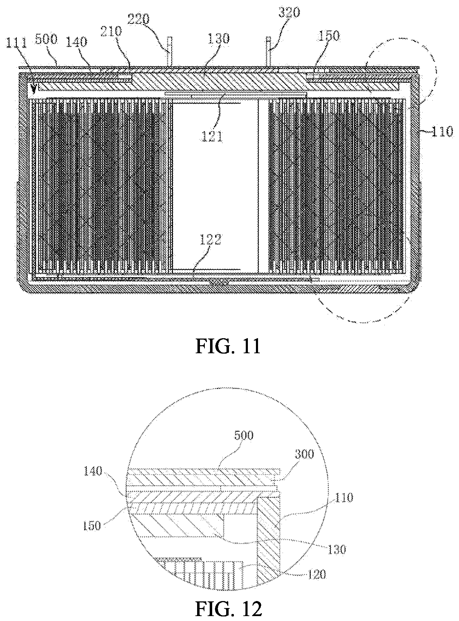

Referring to FIGS. 11 and 12, in some optional embodiments, the shell 110 has an accommodation groove 111. The battery cell 120 is disposed in the accommodation groove 111, so that the battery cell 120 is protected by the shell 110, thereby avoiding the battery 120 from external squeezing.

Referring to FIGS. 4 and 11, in some optional embodiments, the first end cover 130 and the second end cover 140 are disposed spaced apart at an end of the battery cell 120 facing away from the bottom of the accommodation groove 111. Exemplary, the first end cover 130 and the second end cover 140 are disposed at a groove opening of the accommodation groove 111 to cover the groove opening of the accommodation groove 111 through the first end cover 130 and the second end cover 140.

Referring to FIG. 11, in some optional embodiments, one of the first end cover 130 and the shell 110 is connected to the positive electrode of the battery cell 120 and the other of the first end cover 130 and the shell 110 is connected to the negative electrode of the battery cell 120. Further optionally, the second end cover 140 is connected to the shell 110 so that the second end cover 140 can be connected to the electrode of the battery cell 120 through the shell 110. Further optionally, the first end cover 130 provides the installation base for the first electrode adapter sheet 200. The second end cover 140 provides the installation base for the second electrode adapter sheet 300.

In some optional embodiments, the first end cover 130 is connected to the first input end 210. The second end cover 140 is connected to the second input end 310. Exemplary, the first input end 210 is attached to a side of the first end cover 130 facing away from the battery cell 120, and the first input end 210 is electrically connected to the first end cover 130. The second input end 310 is attached to a side of the second end cover 140 facing away from the battery cell 120, and the second input end 310 is electrically connected to the second end cover 140. As some optional embodiments, the first input end 210 is connected to the first end cover 130 by means of welding and the second input end 310 is connected to the second end cover 140 by means of welding.

In the above embodiment, the shell 110 can be used to connect the second end cover 140 and the electrode of the battery cell 120 at an end of the battery cell 120 facing away from the second end cover 140, and the second electrode adapter sheet 300 is connected to the second end cover 140. Therefore, there is no need to set a connector at the side wall of the battery body 100 to connect the second electrode adapter sheet 300 and the electrode of the battery cell 120 at the side of the battery cell 120 facing away from the second end cover 140. This is beneficial for improving the compactness of the battery structure, and reducing the space occupied by the battery. Therefore, in the case in which the battery is used in an electronic device, it is beneficial for the miniaturization of the electronic device.

In some optional embodiments, the shell 110 is connected to the negative electrode of the battery cell 120, and the first end cover 130 is connected to the positive electrode of the battery cell 120.

Of course, in other embodiments, the shell 110 is connected to the positive electrode of the battery cell 120, and the first end cover 130 is connected to the negative electrode of the battery cell 120.

As shown in FIGS. 11, 16, and 21, in some optional embodiments, the battery cell 120 includes a first electrode tab 121, a second electrode tab 122, and a battery cell main body 125. Optionally, the battery cell main body 125 has a first end and a second end opposite to each other. The first electrode tab 121 is disposed at the first end of the battery cell main body 125, and the second electrode tab 122 is disposed at the second end of the battery cell main body 125.

In some optional embodiments, the first electrode tab 121 is disposed parallel to an end face of the first end of the battery cell main body 125. Further optionally, a fifth insulating pad 123 is disposed between the first electrode tab 121 and the battery cell main body 125.

In some optional embodiments, the second electrode tab 122 is disposed parallel to an end face of the second end of the battery cell main body 125. Further optionally, a sixth insulating pad 124 is disposed between the second electrode tab 122 and the battery cell main body 125.

In an optional embodiment, the first electrode tab 121 is connected to a positive electrode of the battery cell main body 125, and the second electrode tab 122 is connected to a negative electrode of the battery cell main body 125.

In some further optional embodiments, the first electrode tab 121 is attached to the first end cover 130. Further optionally, the first electrode tab 121 is welded to the first end cover 130, and a welding area between the first electrode tab 121 and the first end cover 130 is smaller than a width of the first electrode tab 121.

In some further optional embodiments, the second electrode tab 122 is attached to the bottom of the shell 110. Further optionally, the second electrode tab 122 is welded to the bottom of the shell 110, and a welding area between the second electrode tab 122 and the bottom of the shell 110 is smaller than a width of the second electrode tab 122.

In some optional embodiments, as shown in FIGS. 1 to 4, the battery further includes a first insulating pad 400. The first output end 220 is located at a side of the second end cover 140 facing away from the battery cell 120, and the first insulating pad 400 is located between the first electrode adapter sheet 200 and the second end cover 140. Exemplary, the material of the first insulating pad 400 is an insulating material to separate the first electrode adapter sheet 200 and the second end cover 140 through the first insulating pad 400, so as to avoid the first electrode adapter sheet 200 and the second end cover 140 from direct contacting to result in short circuit of the battery.

In the above embodiment, the first insulating pad 400 is disposed between the first electrode adapter sheet 200 and the second end cover 140, so that at least part of the first electrode adapter sheet 200 can be disposed at a side of the first insulating pad 400 facing away from the second end cover 140. Therefore, in this embodiment the position of the first output end 220 of the first electrode adapter sheet 200 and the position of the first insulating pad 400 can be adjusted as required, thereby improving the flexibility of the position arrangement of the first output end 220 to adapt to the position of an interface for connecting the battery in the battery compartment in different electronic devices.

In other optional embodiments, the second output end 320 is located at a side of the first end cover 130 facing away from the battery cell 120, and the first insulating pad 400 is located between the second electrode adapter sheet 300 and the first end cover 130.

In the above embodiment, the first insulating pad 400 is disposed between the second electrode adapter sheet 300 and the first end cover 130, so that at least part of the second electrode adapter sheet 300 can be disposed at a side of the first insulating pad 400 facing away from the first end cover 130. Therefore, in this embodiment the position of the second output end 320 in the second electrode adapter sheet 300 and the position of the first insulating pad 400 can be adjusted as required, thereby improving the flexibility of the position arrangement of the second output end 320 to adapt to the position of the an interface for connecting the battery in the battery compartment in different electronic devices.

In some optional implementations, a projection of the first output end 220 in the thickness direction is located on the first insulating pad 400, and/or a projection of the second output end 320 in the thickness direction is located on the first insulating pad 400. In this way, it is beneficial for preventing short circuit in the battery and improving reliability of the battery.

In addition, in other optional embodiments, the projection of the first output end 220 in the thickness direction and the projection of the second output end 320 in the thickness direction are located on the first insulating pad 400. This is beneficial for ensuring the consistency of the height of the first output end 220 and the height of the second output end 320 protruding away from the end face of the battery body 100.

It should be noted that the battery cell 120 can be spirally wound, and its thickness direction is the radial direction of the battery cell 120.

In some optional embodiments, referring to FIG. 4, the first output end 220 and the second output end 320 are all located at the side of the second end cover 140 facing away from the battery cell 120. The second electrode adapter sheet 300 further may include a second connecting portion 340. Exemplary, the second input end 310 is mounted to be attached to the second end cover 140, the second connecting portion 340 is attached to the side of the first insulating pad 400 facing away from the battery cell 120. A first end of the second connecting portion 340 is connected to the second output end 320, and a second end of the second connecting portion 340 is connected to the second input end 310.

In some embodiments, a second electrode adapter sheet 300 further may include a second bending portion 350. The second input end 310 is mounted to be attached to the second end cover 140, the second connecting portion 340 is attached to the side of the first insulating pad 400 facing away from the battery cell 120. A first end of the second connecting portion 340 is connected to the second output end 320, and a second end of the second connecting portion 340 is connected to the second input end 310 through the second bending portion 350.

In some optional embodiments, the second connecting portion 340 is in a sheet-shaped structure and the second connecting portion 340 is mounted to be attached to the side of the first insulating pad 400 facing away from the second end cover 140. Further optionally, the second input end 310 is a sheet-shaped structure and the second input end 310 is mounted to be attached to the side of the second end cover 140 facing away from the battery cell 120. The second input end 310 and the second connecting portion 340 are parallel to each other. In a further optional embodiment, the second bending portion 350 is bent to a side facing away from the second cover 140 relative to the second input end 310. The second bending portion 350 is bent to a side near the second end cover 140 relative to the second connecting portion 340. Further optionally, a dimension of the second bending portion 350 in a direction perpendicular to the second end cover 140 is equal to a dimension of the first insulating pad 400 in a direction perpendicular to the second end cover 140. Where, the direction perpendicular to the second end cover 140 can be the direction shown by the Z-axis in FIGS. 1, 3, and 11.

In a further optional embodiment, the second electrode adapter sheet 300 is an integrated structure. Exemplary, the second electrode adapter sheet 300 may be formed by punching a metal sheet.

In the above embodiments, by means of providing the second bending portion 350 in the second electrode adapter sheet 300, the second electrode adapter sheet 300 can adapt to the height difference between the first insulating pad 400 and the second end cover 140. Therefore, when the second input end 310 is mounted to be attached to the second end cover 140, the second connecting portion 340 can be attached to the side of the first insulating pad 400 facing away from the battery cell 120. This is beneficial for improving the compactness of the assembly of the second electrode adapter sheet 300. In addition, the second connecting portion 340 is attached to the side of the first insulating pad 400 facing away from the battery cell 120. This is beneficial for increasing the contact area between the second connecting portion 340 and the first insulating pad 400, and thus is beneficial for preventing the first insulating pad 400 from being damaged by local stress concentration.

In a further optional embodiment, in a case in which the first output end 220 and the second output end 320 are all located at the side of the second end cover 140 facing away from the battery cell 120, the second bending portion 350 abuts against the first insulating pad 400. This is beneficial for improving the compactness of the assembly between the second electrode adapter sheet 300 and other components. In addition, this is also beneficial for ensuring that the second connecting portion 340 can be fully supported by the first insulating pad 400, and thus this is beneficial for improving the reliability of the assembly of the second electrode adapter sheet 300.

In other optional embodiments, the first output end 220 and the second output end 320 are all located at the side of the first end cover 130 facing away from the battery cell 120. The first electrode adapter sheet 200 further includes a first bending portion and a first connecting portion 230. The first input end 210 is mounted to be attached to the first end cover 130, the first connecting portion 230 is attached to the side of the first insulating pad 400 facing away from the battery cell 120, a first end of the first connecting portion 230 is connected to the first output end 220, and a second end of the first connecting portion 230 is connected to the first input end 210 through the first bending portion.

In further some optional embodiments, the first connecting portion 230 is a sheet-shaped structure and the first connecting portion 230 is mounted to be attached to the side of the first insulating pad 400 facing away from the first end cover 130. Further optionally, the first input end 210 is a sheet-shaped structure and the first input end 210 is mounted to be attached to the side of the first end cover 130 facing away from the battery cell 120. In a further optional embodiment, the first input end 210 and the first connecting portion 230 are parallel to each other. In a further optional embodiment, the first bending portion is bent to a side facing away from the first end cover 130 relative to the first input end 210. The first bending portion is bent to a side near the first end cover 130 relative to the first connecting portion 230. Further optionally, a dimension of the first bending portion in a direction perpendicular to the first end cover 130 is equal to a dimension of the first insulating pad 400 in the direction perpendicular to the first end cover 130. Optionally, the direction perpendicular to the first end cover 130 can be the direction shown by the Z-axis in FIGS. 1, 3, and 11.

In a further optional embodiment, the first electrode adapter sheet 200 is an integrated structure, that is, the first connecting portion 230 and the first input end 210 are an integrated structure. Exemplary, the first electrode adapter sheet 200 may be formed by punching a metal sheet.

In the above embodiment, by means of providing the first bending portion in the first electrode adapter sheet 200, the first electrode adapter sheet 200 can adapt to the height difference between the first insulating pad 400 and the first end cover 130. Therefore, when the first input end 210 is mounted to be attached to the first end cover 130, the first connecting portion 230 can be attached to the side of the first insulating pad 400 facing away from the battery cell 120. This is beneficial for improving the installation compactness of the first electrode adapter sheet 200. In addition, the first connecting portion 230 is attached to the side of the first insulating pad 400 facing away from the battery cell 120. This is beneficial for increasing the contact area between the first connecting portion 230 and the first insulating pad 400, and thus is beneficial for preventing the first insulating pad 400 from being damaged by local stress concentration.

In some optional embodiments, in a case in which the first output end 220 and the second output end 320 are all located at the side of the first end cover 130 facing away from the battery cell 120, the first bending portion abuts against the first insulating pad 400. This is beneficial for improving the compactness of the assembly between the first electrode adapter sheet 200 and other components. In addition, this is also beneficial for ensuring that the second connecting portion 340 can be fully supported by the first insulating pad 400, and thus this is beneficial for improving the installation reliability of the first electrode adapter sheet 200.

In some optional embodiments, as shown in FIG. 12, the first output end 220 is located at the side of the second end cover 140 facing away from battery cell 120, and at last part of the side of the first end cover 130 facing away from battery cell 120 protrudes away from the side face of the second end cover 140 facing away from battery cell 120, and is flush with a side, facing away from the second end cover 140, of the first insulating pad 400 on the second end cover 140. Exemplary, the first electrode adapter sheet 200 is connected to a part of the first end cover 130 protruding away from the side face of the second end cover 140 facing away from the battery cell 120. In an optional embodiment, at least part of the first input end 210 of the first electrode adapter sheet 200 is mounted to be attached to a part of the first end cover 130 protruding away from the side face of the second end cover 140 facing away from the battery cell 120.

In the above embodiment, the first input end 210 is connected to a part of the first end cover 130 that is flush with a side of the first insulating pad 400 facing away from the second end cover 140. Therefore, this is beneficial for improving the smoothness and compactness of the mounted first electrode adapter sheet 200.

In other optional embodiments, the second output end 320 is located at the side of the first end cover 130 facing away from the battery cell 120. At least part of the second end cover 140 facing away from the battery cell 120 protrudes away from the side face of the first end cover 130 facing away from the battery cell 120, and is flush with a side, facing away from the first end cover 130, of the first insulating pad 400 on the first end cover 130. Exemplary, the second electrode adapter sheet 300 is connected to a part of the second end cover 140 protruding away from the side face of the first end cover 130 facing away from the battery cell 120. In an optional embodiment, at least part of the second input end 310 of the second electrode adapter sheet 300 is mounted to be attached to a part of the second end cover 140 protruding away from the side face of first end cover 130 facing away from the battery cell 120.

In the above embodiment, the second input end 310 is connected to a part of the second end cover 140 that is flush with a side of the first insulating pad 400 facing away from the first end cover 130. Therefore, this is beneficial for improving the smoothness and compactness of the mounted second electrode adapter sheet 300.

Referring to FIGS. 11, 12 and 15, in some optional embodiments, the second end cover 140 has a position-limiting groove 141, the position-limiting groove 141 is locate at a side of the second end cover 140 near the battery cell 120. At least part of the shell 110 is located in the position-limiting groove 141 and in position-position-limiting fit with the second end cover limit 140. In some optional embodiments, as shown in FIGS. 11 and 12, the position-limiting groove 141 is a ring-shaped position-limiting groove, and a side wall of an inner ring side of the position-limiting groove 141 abuts against an inner side wall of the shell 110. In a further optional embodiment, a width of the position-limiting groove 141 in radial direction is equal to a thickness of the shell 110 in radial direction.

Further optionally, the second end cover 140 is sealedly connected with the shell 110. Exemplary, a peripheral edge of the second end cover 140 is sealedly welded to the shell 110.

In the above embodiment, the second end cover 140 can be positioned during the assembly process of the second end cover 140 and shell 110 by providing the position-limiting groove 141 on the second end cover 140 so as to prevent the second end cover 140 from offsetting relative to the shell 110. This is thus beneficial for improving the assembly accuracy of the second end cover 140 and shell 110, and preventing misalignment between the second end cover 140 and the shell 110 to result in poor welding between the second end cover 140 and the shell 110.

In some optional embodiments, the battery body 100 further includes a second insulating pad 150. The second insulating pad 150 and the second end cover 140 are all provided with avoidance holes 142, respectively, the second insulating pad 150 is stacked at a side of the second end cover 140 near the battery cell 120. The first end cover 130 includes a first cover body portion 131 and a second cover body portion 132 connected to the first cover body portion 131. The first cover body portion 131 is stacked at a side of the second insulating pad 150 facing away from the second end cover 140. The second cover body portion 132 is located at the side of the first cover body portion 131 facing away from the battery cell 120, and the second cover body portion 132 passes through the second insulating pad 150 and the second end cover 140 and is connected to the first input end 210 along the avoidance holes 142 of the second insulating pad 150 and the second end cover 140.

In the above embodiment, the first end cover 130 and the second end cover 140 not only can be prevented from short circuit, but also can form an installation base for mounting the first electrode adapter sheet 200 and the second electrode adapter sheet 300 at the same end of the battery body 100.

Referring to FIGS. 4 to 6, in some optional embodiments, the second end cover 140 is a ring-shaped structure. Further optionally, the second electrode adapter sheet 300 can be disposed as an arc-shaped structure. Exemplary, the second input end 310 and the second connecting portion 340 may be disposed as arc-shaped structures, so that the second input end 310 and the second connecting portion 340 may be stacked on the second end cover 140.

Referring to FIG. 4, in some optional embodiments, the first insulating pad 400 is an arc-shaped structure. Exemplary, the first insulating pad 400 is stacked at the side of the second end cover 140 facing away from the battery cell 120. Further optionally, the second input end 310 is mounted to be attached to a part, which is not covered by the first insulating pad 400, of the second end cover 140. The second connecting portion 340 is mounted to be attached to the side of the first insulating pad 400 facing away from the second end cover 140, and the second input end 310 and the second connecting portion 340 are connected through the second bending portion 350. In a further optional embodiment, the second output end 320 is perpendicular to the second connecting portion 340.

Referring to FIG. 4, in some optional embodiments, the first input end 210 is a round-shaped metal sheet, the first connecting portion 230 is connected to the first input end 210, and the first connecting portion 230 extends radially along the first input end 210, so that at least part of the first connecting portion 230 can be attached to the side of the first insulating pad 400 facing away from the second cover 140. Further optionally, the first output end 220 is connected to the end of the first connecting portion 230 facing away from the first input end 210, and the first output end 220 is perpendicular to the first connecting portion 230.

In some optional embodiments, the second insulating pad 150 may be sealedly matched with the first end cover 130 and the second end cover 140, respectively, so that the first end cover 130, the second end cover 140 and the second insulating pad 150 may be used to seal the groove opening of the accommodation groove 111 of the shell 110.

In some optional embodiments, the side of the second insulating pad 150 near the second end cover 140 is bonded to the second end cover 140, and the side of the second insulating pad 150 facing away from the second end cover 140 is bonded to the first end cover 130, so that the second end cover 140 can provide support for the first end cover 130. Therefore, this is beneficial for reducing the acting force of the second end cover 140 onto the battery cell 120 to achieve the purpose of protecting the battery cell 120.

Referring to FIGS. 1, 2 and 11, in some optional embodiments, the battery provided in the present application further includes a third insulating pad 500. In some optional embodiments, the third insulating pad 500 is stacked at a side of the first electrode adapter sheet 200 and/or the second electrode adapter sheet 300 facing away from the battery body 100. Optionally, the third insulating pad 500 covers the first input end 210 and the second input end 310.

In some optional embodiments, as shown in FIGS. 1 and 3, the third insulating pad 500 is disposed at the side of the first electrode adapter sheet 200 and the second electrode adapter sheet 300 facing away from the battery body 100. Further optionally, the third insulating pad 500 is provided with an avoidance hole, and the first output end 220 and the second output end 320 pass through the third insulating pad 500 by means of the avoidance hole of the third insulating pad 500. Exemplary, the avoidance hole of the third insulating pad 500 may be either a through hole disposed in the third insulating pad 500 or a notch disposed on the third insulating pad 500.

In some optional embodiments, as shown in FIG. 1, the battery further includes a fourth insulating pad 600. In an optional embodiment, the fourth insulating pad 600 is disposed on the peripheral wall of the battery body 100. Exemplary, the fourth insulating pad 600 is disposed on the peripheral wall of the shell 110 to prevent the shell 110 from electrically conducting with a battery compartment structure in an electronic device. Therefore, this is beneficial for preventing the battery from short circuit of other components in the electronic device.

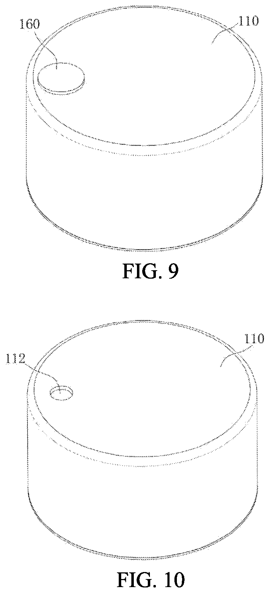

Referring to FIG. 10, the shell 110 is provided with a liquid injection hole 112. Exemplary, the liquid injection hole 112 is disposed in the bottom of the shell 110, and the liquid injection hole 112 passes through the shell 110 and is communicated with the accommodation groove 111. An electrolyte is injected into the accommodation groove 111 through the liquid injection hole 112.

Referring to FIGS. 9, 10, 11, 13 and 14, in some optional embodiments, the battery body 100 further includes a sealing cover 160. The sealing cover 160 is used to cover and seal the liquid injection hole 112 so as to prevent the electrolyte in the accommodation groove 111 from leaking out of the liquid injection hole 112.

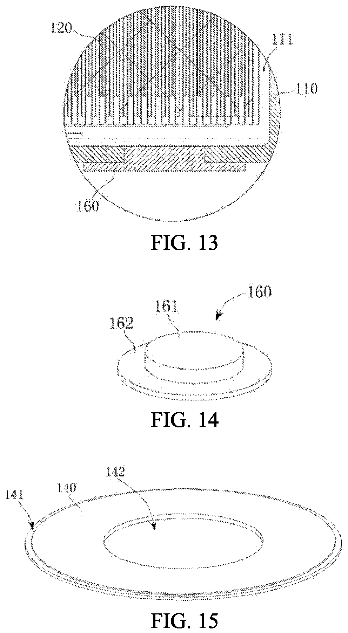

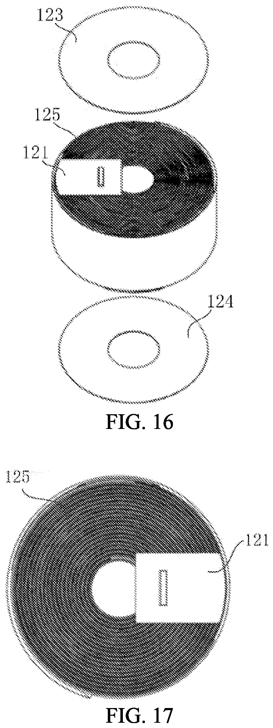

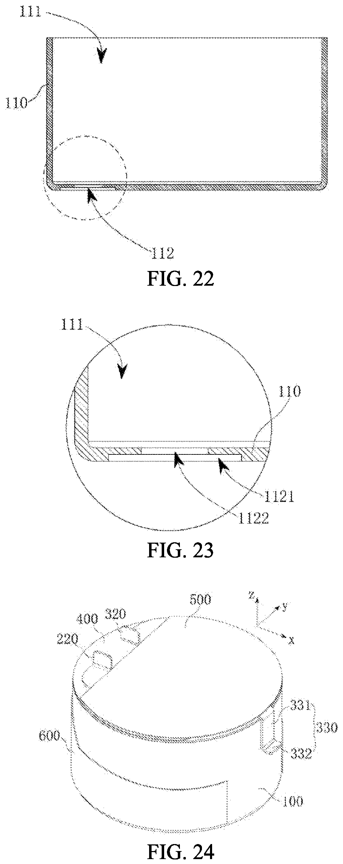

Referring to FIGS. 22 and 23, in some optional embodiments, the liquid injection hole 112 includes a first hole segment 1121 and a second hole segment 1122 connected to the first hole segment 1121, the first hole segment 1121 is located at an end of the second hole segment 1122 facing away from the accommodation groove 111, and the hole diameter of the first hole segment 1121 is larger than that of the second hole segment 1122. Referring to FIGS. 15 and 16, the battery body 100 further includes a sealing cover 160, the sealing cover 160 is disposed in the first hole segment 1121 and is in position-position-limiting fit with a hole wall of the first hole segment 1121, and the sealing cover 160 covers an end of the second hole segment 1122 near the first hole segment 1121, and the sealing cover 160 is sealedly connected with the shell 110.

In the above embodiments, an inner side wall of the first hole segment 1121 and a peripheric wall of the sealing cover 160 can be used to be abutted against each other for position limiting. This prevents the sliding of the sealing cover 160 relative to the shell 110, and thus this is beneficial for improving the assembly accuracy of the sealing cover 160 and the shell 110. In some optional embodiments, the sealing cover 160 is sealedly connected to the shell 110 by means of welding. Specifically, in the process of welding, the sealing cover 160 abuts against the inner side wall of the first hole segment 1121 to prevent the sealing cover 160 from sliding relative to the shell 110 in the process of welding.

Referring to FIGS. 13 and 14, in some optional embodiments, the sealing cover 160 includes a sealing main body portion 161 and a position-limiting portion 162. The sealing main body portion 161 cover the liquid injection hole 112, and the sealing main body portion 161 is sealedly connected to the seal of the shell 110. The position-limiting portion 162 is located at a side of the sealing main body portion 161 facing the liquid injection hole 112, and at least part of the position-limiting portion 162 is located in the liquid injection hole 112. Exemplary, the sealing main body portion 161 is attached to the bottom of the shell 110. Further optionally, the sealing main body portion 161 is sealedly connected to the shell 110. Exemplary, the sealing main body portion 161 is sealedly welded to shell 110.

In the above embodiment, the position-limiting portion 162 can be used to implement the position limiting of the sealing cover 160. This prevents the movement of the sealing cover 160 relative to the shell 110 in the assembly process of the sealing cover 160 and the shell 110, and thus this is beneficial for improving the assembly accuracy of the sealing cover 160 and the shell 110, and ensuring that the sealing cover 160 can seal the liquid injection hole 112. On the other hand, the present application also provides an electronic device. The electronic device includes a battery compartment and the battery provided by any one of embodiments of the present application. Exemplary, the battery compartment has an accommodation space and an opening. Where, the accommodation space is used for the battery to be accommodated and mounted. The opening is communicated with the accommodation space, so that the battery can be mounted into the battery compartment from the opening, or the battery can be detached from the opening. In some optional embodiments, an end of the battery facing away from the first output end 220 and the second output end 320 is opposite to the opening.

In the above embodiment, the battery is mounted into the battery compartment in a direction perpendicular to the end face of the battery body 100. In the battery provided in the present application, the first output end 220 and the second output end 320 are disposed at the same end of the battery body 100, and extend to a direction facing away from the end face of the battery body 100, so that there is no need to form a gap between the battery body 100 and the inner side wall of the battery compartment. This is beneficial for improving the assembly compactness of the battery compartment and the battery, and reducing the volume of the electronic device. Alternatively, in a case in which the electronic device has a certain volume, this embodiment is beneficial for allowing the battery compartment of the electronic device to accommodate a larger battery, and thus is beneficial for improving the endurance ability of the electronic device.

In some optional embodiments, the electronic device provided in the present application may be, but is not limited to, a bluetooth headset, an e-reader, and an electronic watch. In the related technologies, the button battery includes a position-limiting part, the position-limiting part is disposed at the side wall of the battery body so as to be in position-position-limiting fit with the battery compartment in the electronic device for assisting the docking of the button battery and the electronic device. However, in the related technologies, the position-limiting part is an independent component, and in the process of preparing the button battery, the position-limiting part needs to be welded to the side wall of the battery body by welding. On the one hand, the independent provision of the position-limiting part increases the difficulty of assembling the button battery, which is not conducive to shortening the production cycle of the button battery. On the other hand, there are errors in the process of assembling the position-limiting part to the side wall of the battery body, which is not conducive to improving the alignment accuracy in the process of assembling the button battery to the electronic device.

In view of the above technical problems, in the battery provided by the embodiment of the present application, the second electrode adapter sheet 300 further includes a positioning portion 330, at least part of the positioning portion 330 protrudes away from the side wall of the battery body 100. Therefore, in the process of mounting the battery to the electronic device, the position of the first output end 220 and the second output end 320 can be determined by observing the position of the positioning portion 330, so as to achieve the alignment between the battery and the battery compartment. This facilitates the docking between the battery and the electronic device, and reduces the difficulty of the alignment between the battery and the electronic device. **In** addition, in the battery provided in the present embodiment, the positioning portion 330 is a part of the second electrode adapter sheet 300, thus there is no need to separately assemble the positioning portion 330 and the battery body. Moreover, the error of mounting the electrode adapter sheets may be avoided, and the error of mounting the position-limiting part which affect the alignment accuracy between electrode adapter sheet and mounting holes in the electronic device may be avoided.

The structure and working principle of the positioning section 330 will be described in combination with FIGS. 24 to 33.

In some optional embodiments, as shown in FIG. 24, a battery provided in the present application includes a battery body 100, a first electrode adapter sheet 200, and a second electrode adapter sheet 300, where the battery body 100 is a basic structural component that can provide a installation base for other components and can be used to store electrical energy.

Referring to FIGS. 24 to 28, in some optional embodiments, the first electrode adapter sheet 200 and the second electrode adapter sheet 300 are all located at the battery body 100. Exemplary, the first electrode adapter sheet 200 and the second electrode adapter sheet 300 are disposed spaced apart at the battery body 100. This prevents the first electrode adapter sheet 200 and the second electrode adapter sheet 300 from being directly electrically conducted, thereby effectively avoiding the short circuit of the first electrode adapter sheet 200 and the second electrode adapter sheet 300.

Where, the positioning portion 330 is connected to at least one of the second input end 310 and the second output end 320, and at least part of the positioning portion 330 protrudes away from the side wall of the battery body 100.

In some optional embodiments, the battery body 100 is a column-shaped structure, such as a cylindrical-shaped structure, a prismatic-shaped structure. Optionally, the first end of the battery body 100 may be an end of the battery body 100 along the axis direction thereof. At least part of the positioning portion 330 protrudes away from the side wall of the battery body 100, that is, at least part of the positioning portion 330 protrudes away from the peripheral wall of the battery body 100.

In the above embodiment, the positioning portion 330 is disposed as an integrated structure with the second input end 310 and the second output end 320, and then the mounting of the second electrode adapter sheet 300 may achieve the fixing of the positioning portion 330 relative to the battery body 100. Therefore, compared with related technologies, this is beneficial for reducing the number of parts in the battery, reducing the step of mounting the position-limiting part, and this is beneficial for reducing the difficulty of the assembling of the battery, and shortening the production cycle of the battery.

In addition, in the process of mounting the battery to the electronic device, the battery is mainly to achieve the alignment of the first output end 220 and the second output end 320 of the battery with mounting holes in the electronic device. In the related technologies, the position-limiting part and the component used for adapter connection in the battery are two different components, and both are disposed on the battery body. Specifically, in related technologies, the assembly error between the position-limiting part and the battery body is a first assembly error. In related technologies, the assembly error between the adapter component and the battery body is a second assembly error. Therefore, in the related technologies, the assembly error between the position-limiting part and the pins used for adapter connection is the sum of the first assembly error and the second assembly error. In the battery provided in the present application, the positioning portion 330 and the second output end 320 used for adapter connection are different portions of the same component, that is, the positioning portion 330 and the second output end 320 used for adapter connection are integrated structure. Therefore, there is no assembly error in the relative position between the positioning portion 330 and the second output end 320, so the battery provided in the present application is beneficial for improving the alignment accuracy in the process of assembling the battery and the electronic device.

In some optional embodiments, the second electrode adapter sheet 300 may include a plurality of positioning portions 330. Further optionally, the plurality of positioning portions 330 can be distributed spaced apart along the peripheral direction of the battery body 100. In this way, by means of providing a plurality of positioning portions 330 by the second electrode adapter sheet 300, it is beneficial for further improving the alignment accuracy between the battery and the electronic device.

As an optional embodiment, the first electrode adapter sheet 200 and the second electrode adapter sheet 300 both include positioning portions 330, respectively. Where the positioning portion 330 of the first electrode adapter sheet 200 is connected to at least one of the first input end 210 and the first output end 220. The positioning portion 330 of the second electrode adapter sheet 300 is connected to at least one of the second input end 310 and the second output end 320.

In some optional embodiments, as shown in FIGS. 24 to 27, the positioning portion 330 includes a first sub-portion 331 and a second sub-portion 332. Where, the first sub-portion 331 extends along the side wall of the battery body 100. In some optional embodiments, the battery body 100 is a column-shaped structure. The first sub-portion 331 can be disposed along the height direction of the battery body 100. The height direction of the battery body 100 can be the axis direction of the battery body 100. Exemplary, the extension direction of the first subpart 331 may be perpendicular to the end face of the first end of the battery body 100.

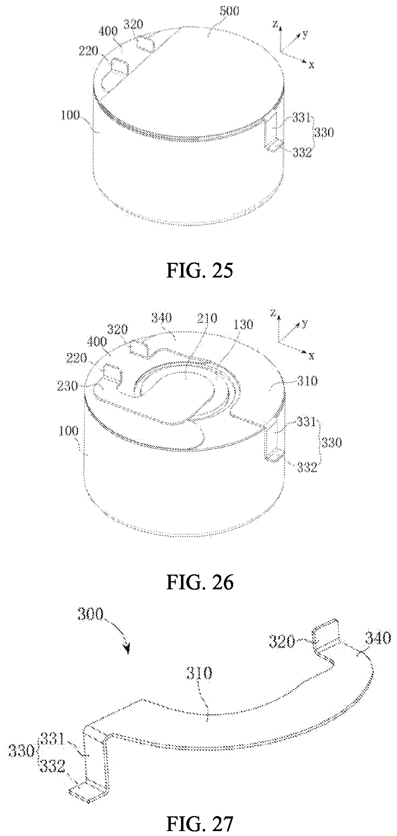

In further optional embodiments, a first end of the first sub-portion 331 is connected to the second input end 310 and/or the second output end 320, and a second end of the first sub-portion 331 is connected to the second sub-portion 332. The second sub-portion 332 extends to a direction facing away from the side wall of the battery body 100 and protrudes away from the side wall of the battery body 100. Referring to FIGS. 24 and 26, in some optional embodiments, the second sub-portion 332 extends to the direction facing away from the side wall of the battery body 100 relative to the first sub-portion 331.

In the battery provided by the above embodiment, the first sub-portion 331 extends along the side wall of the battery body 100, and the specific position of the second sub-portion 332 on the side wall of the battery body 100 can be disposed according to the structure of the electronic device for which the battery is applicable. This is thus beneficial for improving the flexibility of setting the position of the second sub-portion 332. Specifically, the position of the second sub-portion 332 can be adjusted by adjusting the size of the first sub-portion 331 in its extension direction. This is thus beneficial for improving the flexibility of setting the position of the second sub-portion 332 to adapt to different electronic devices.

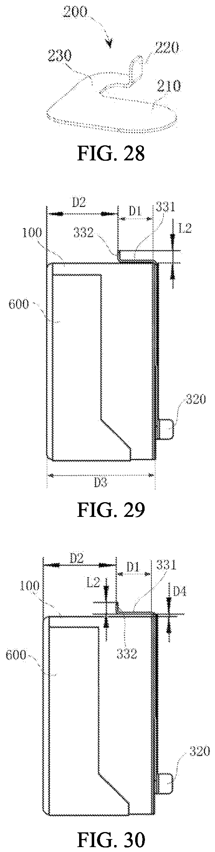

In some optional embodiments, as shown in FIGS. 29 and 30, a distance between the second sub-portion 332 and a first end of the battery body 100 is a first distance D1. A distance between the second sub-portion 332 and a second end of the battery body 100 is a second distance D2, and the first distance D1 is greater than the second distance D2.

In the battery provided above, the first distance D1 is greater than the second distance D2. In the process of inserting the battery into the battery compartment, the second sub-portion 332 can be closer to the groove opening of the battery compartment, so as to observe the position of the second sub-portion 332. The second output end 320, the first output end 220 and mounting holes of the electronic device can be aligned according to the position of the second sub-portion 332. In addition, the distance between the second sub-portion 332 and the first end of the battery body 100 is greater than the distance between the second sub-portion 332 and the second end of the battery body, this is further beneficial for preventing the second sub-portion 332 from deflecting out of the position-limiting groove of the battery compartment, and improving the alignment accuracy of the battery and the battery compartment.

In some optional embodiments, as shown in FIG. 29, a distance between the first end of the battery body 100 and the second end of the battery body 100 is a third distance D3, and the third distance D3 is greater than the first distance D1. Exemplary, the third distance D3 is greater than the first distance D1, which is beneficial for preventing the positioning portion 330 from protruding away from the end face of the second end of the battery body 100, and prevent the positioning portion 330 from interfering with the cover of the battery compartment in the electronic device, and it is convenient to cover the battery compartment for accommodating the battery in the electronic device.

In some optional embodiments, the first output end 220 and the second output end 320 are spaced apart and disposed parallel to the first end of the battery body 100, and the gap between the first output end 220 and the second output end 320 is opposite to the positioning portion 330. Further optionally, the first output end 220 and the second output end 320 are spaced apart and distributed parallel in the first direction.

In some embodiments, a midline of the positioning portion 330 perpendicular to the first direction coincides with a midline between the first output end 220 and the second output end 320.

As an alternative implementation, the first output end 220, the second output end 320, and the second sub-portion 332 are all sheet-shaped structures. Further optionally, the plane where the first output end 220 and second output end 320 are located is perpendicular to the plane where the second sub-portion 332 is located. Further optionally, the first output end 220 and the second output end 320 are symmetrically distributed at two sides of the second sub-portion 332 in the first direction, respectively. Where, the first direction is the direction shown by the Y-axis in FIGS. 1, 3, and 4.

In the above embodiment, the gap between the first output end 220 and the second output end 320 is opposite to the positioning portion 330, this is beneficial for reducing the difficulty of determining, by the positioning portion 330, the position of the first output end 220 and the second output end 320, and thus is beneficial for reducing the difficulty of alignment between the battery and the battery compartment.

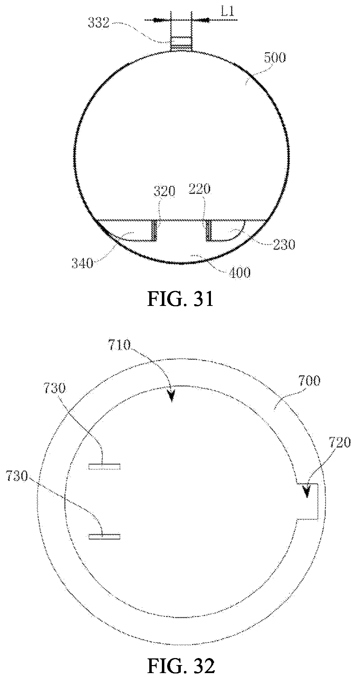

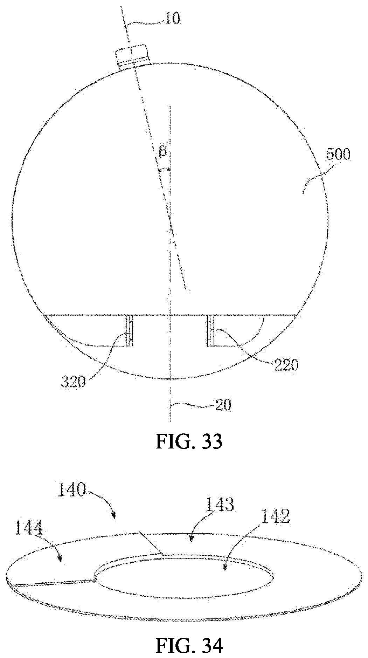

In some optional embodiments, as shown in FIGS. 31 and 33, the first output end 220 and the second output end 320 are symmetrically distributed at two sides of a first plane 20, respectively. A symmetry plane along the radial direction of the battery body 100 in the positioning portion 330 is a second plane 10, and an angle between the second plane 10 and the first plane 20 is β. Further optionally, the angle β of the second plane 10 and the first plane 20 ranges from 0 to 10°. In this way, this is beneficial for the alignment accuracy in the process of assembling the battery and the electronic device, and reducing the difficulty of assembling the electronic device and the battery.

In some optional embodiments, the extension face of the first output end 220, the extension face of the second output end 320, and the first plane 20 are all perpendicular to the end face of the battery body 100. In some further optional embodiments, the axis of the battery body 100 is located in the first plane 20.

In some further optional embodiments, the second plane 10 coincides with the first plane 20. In this way, this is beneficial for improving the alignment accuracy in the process of assembling the battery and the electronic device.

In some optional embodiments, as shown in FIGS. 2 and 26, the first electrode adapter sheet 200 and the second electrode adapter sheet 300 are disposed spaced apart at the end face of the first end of the battery body 100.

In the above embodiment, the first electrode adapter sheet 200 and the second electrode adapter sheet 300 are located at the same end of the battery body 100, thus avoiding the stacking of the first electrode adapter sheet 200 and the second electrode adapter sheet 300 in the direction perpendicular to the end face of the battery body 100. Compared with the related technologies that electrode adapter sheets are disposed at the opposite ends of the battery body 100, this is beneficial for reducing the size of the battery in the direction perpendicular to the end face of the battery body 100. In addition, the first electrode adapter sheet 200 and the second electrode adapter sheet 300 are disposed spaced apart, this is beneficial for preventing the first electrode adapter sheet 200 and the second electrode adapter sheet 300 from becoming short circuit when being electrically conducted.

Referring to FIG. 30, in some optional embodiments, there is an avoidance gap between the first sub-portion 331 and the outside wall of the battery body 100. So that in the process of assembling the first sub-portion 331 and the second end cover 140, the relative position between the second input end 310 and the second end cover 140 can be adjusted by adjusting the width D4 of the gap between the first sub-portion 331 and the outside wall of the battery body 100, thereby ensuring the assembly accuracy of the second input end 310 and the second end cover 140. Further optionally, the width D4 of the gap between the first sub-portion 331 and the outside wall of the battery body 100 is 0.2mm to 0.3mm.

Referring to FIG. 31, in some optional embodiments, the second sub-portion 332 has a width L1 of 0.8mm to 3mm. Further optionally, the second sub-portion 332 has a width L1 of 0.8mm~1mm.

Of course, in the case of practical application, the width of the second sub-portion 332 can be adjusted according to the width of the position-limiting groove in the battery compartment of the electronic device. For this reason, the width of the second sub-portion 332 is not limited in this embodiment.

As shown in FIG. 30, the second sub-portion 332 protruding away from the side wall, facing away from the battery body 100, of the first sub-portion 331 has a height of L2. Optionally, the second sub-portion 332 protruding away from the side wall, facing away from the battery body 100, of the first sub-portion 331 has a height L2 greater than 1mm.

In some optional embodiments, referring to FIGS. 24 to 26, the first output end 220 and the second output end 320 are all located at the side of the first end cover 130 facing away from the battery cell 120. The side of the first end cover 130 facing away from the battery cell 120 has a first groove, and the first insulating pad 400 is disposed in the first groove. The side face of the first insulating pad 400 facing away from the battery cell 120 is flush with the groove opening of the first groove, and the second output end 320 is located at the side of the first insulating pad 400 facing away from the battery cell 120.

In the above embodiment, the side face of the first insulating pad 400 facing away from the battery cell 120 is flush with the groove opening of the first groove, so that the second input end 310 and the second connecting portion 340 of the second electrode adapter sheet 300 can be supported. This is conducive to improving the installation stability of the second electrode adapter sheet 300, and improving the assembly compactness of the second electrode adapter sheet 300 and other components. In addition, the first insulating pad 400 is disposed in the first groove, so that the first groove can be used to form a concave platform, so as to avoid the first insulating pad 400 from increasing the size of the battery in the direction perpendicular to its end face, thereby increasing the energy density of the battery.

As shown in FIGS. 2 and 34 to 36, in further some optional embodiments, the first output end 220 and the second output end 320 are all located at the side of the second end cover 140 facing away from the battery cell 120. The side of the second end cover 140 facing away from the battery cell 120 has a second groove 143, and the first insulating pad 400 is disposed in the second groove 143. The side face of the first insulating pad 400 facing away from battery cell 120 is flush with the groove opening of the second groove 143, and the first output end 220 is located at the side of the first insulating pad 400 facing away from battery cell 120.

In the above embodiment, the side face of the first insulating pad 400 facing away from the battery cell 120 is flush with the groove opening of the second groove 143, so that the first input end 210 and the first connecting portion 230 of the first electrode adapter sheet 200 can be supported. This is conducive to improving the installation stability of the first electrode adapter sheet 200, and improving the assembly compactness of the first electrode adapter sheet 200 and other components. In addition, the first insulating pad 400 is disposed in the second groove 143, and the second groove 143 can be used to form a concave platform, so as to avoid the first insulating pad 400 from increasing the size of the battery in the direction perpendicular to its end face.

Referring to FIG. 2, in some optional embodiments, the first insulating pad 400 is an arc-shaped structure. Exemplary, the first insulating pad 400 is stacked at the side of the second end cover 140 facing away from the battery cell 120. Further optionally, the second input end 310 is mounted to be attached to a part, which is not covered by the first insulating pad 400, of the second end cover 140. The second connecting portion 340 is mounted to be attached to the side of the first insulating pad 400 facing away from the second end cover 140. In a further optional embodiment, the second output end 320 is perpendicular to the second connecting portion 340.

Referring to FIGS. 12, 15 and 36, in some optional embodiments, the second end cover 140 has a position-limiting groove 141, the position-limiting groove 141 is located on a side of the second end cover 140 near the battery cell 120. At least part of the shell 110 is located in the position-limiting groove 141 and is in position-limiting fit with the second end cover 140. In some optional embodiments, as shown in FIGS. 11 and 12, the position-limiting groove 141 is a ring-shaped position-limiting groove, and a side wall of an inner ring side of the position-limiting groove 141 abuts against the inner side wall of the shell 110. In a further optional embodiment, the width of the position-limiting groove 141 in radial direction is equal to the thickness of the shell 110 in radial direction.

Further optionally, the second end cover 140 is sealedly connected with the shell 110. Exemplary, the peripheral edge of the second end cover 140 is sealedly welded to the shell 110.

In the above embodiment, the second end cover 140 can be positioned in the process of assembling the second end cover 140 and shell 110 by providing the position-limiting groove 141 on the second end cover 140, so as to prevent the second end cover 140 from offsetting relative to the shell 110. This is thus beneficial for improving the assembly accuracy of the second end cover 140 and shell 110, and preventing misalignment between the second end cover 140 and the shell 110 to result in poor welding between the second end cover 140 and the shell 110.

In related technologies, a higher height of a battery results in a lower volumetric energy density of the battery. This is because that the increase of the height of an insulating tape will cause an adapter sheet to rise, resulting in an increase in the height of the battery. In addition, due to the thickness of the insulating tape, it is necessary to make a surface of a conductive column higher than a surface of a battery cell, and the adapter sheet also needs to be have a bending structure to avoid the insulating tape, resulting in an increase in the height of the battery, while increasing the difficulty of processing parts and increasing costs.

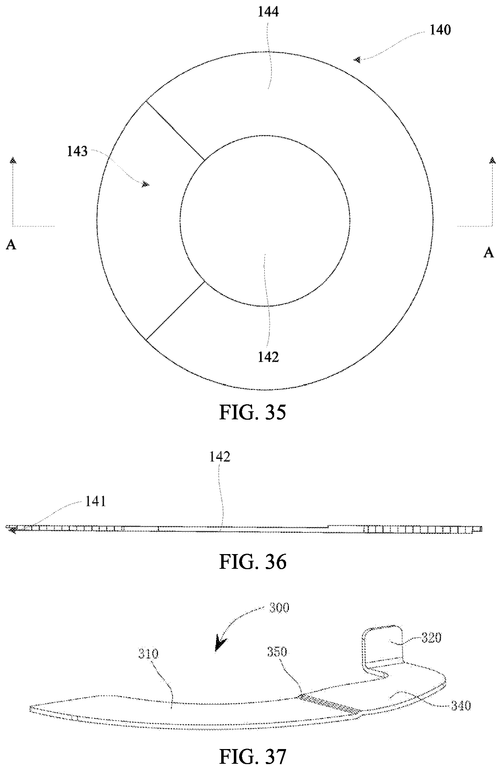

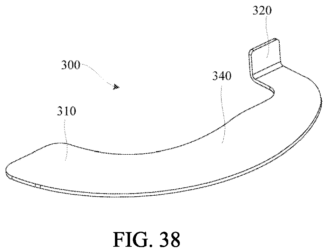

For example, the second electrode adapter sheet 300 needs to have a second bending portion 350 as shown in FIG. 37, so that the second connecting portion 340 is raised relative to the second input end 310 to avoid the first insulating pad 400, and this will cause the second electrode adapter sheet 300 to occupy more height of the battery. While if the second electrode adapter sheet 300 is the structure as shown in FIG. 38, that is, the second connecting portion 340 and the second input end 310 are at the same height, this can avoid the second electrode adapter sheet 300 and the first insulating pad 400 from occupying more height of the battery.

To solve the above problems, in the battery of the embodiments of the present application, the second groove 143 is disposed on the second end cover 140, and the first insulating pad 400 is disposed at the second groove 143, so as to avoid the second connecting portion 340 from being raised relative to the second input end 310, reduce the height occupied by the first insulating pad 400 and the second electrode adapter sheet 300. Thus, the overall height of the battery is reduced to improve the volumetric energy density of the battery.

The second end cover 140 is provided with a second groove 143, and the first insulating pad 400 is bonded to the second groove 143. In this way, the first insulating pad 400 can share part of the height with the second end cover 140, so that there is less part of the bonded first insulation protruding away from the second end cover 140, thereby reducing the overall height of the battery, increasing the volumetric energy density of the battery. Where the depth of the second groove 143 can be less than, equal to or greater than the thickness of the first insulating pad 400.

Exemplary, when the depth of the second groove 143 is greater than or equal to the thickness of the first insulating pad 400, the first insulating pad 400 will not protrude away from the second end cover 140, and the height of the first insulating pad 400 and the height of the second end cover 140 are overlapped, and the first insulating pad 400 will not occupy additional height of the battery. When the depth of the second groove 143 is less than the thickness of the first insulating pad 400, a part of the first insulating pad 400 protrudes away from the second end cover 140, there is partial overlap in the heights the first insulating pad 400 and the second end cover 140, the first insulating pad 400 occupies less height of the battery.

In some embodiments, the side face of the first insulating pad 400 facing away from the battery cell 120 is flush with the groove opening of the second groove 143. In other words, the first insulating pad 400 is completely located in the second groove 143, and the first insulating pad 400 will not protrude away from the second end cover 140. So that the bottom wall of the second groove 143 can be ensured to have sufficient thickness, and the overall thickness of the first insulating pad 400 and the second end cover 140 after being assembled can be effectively reduced, thus reducing the height of the battery.

In a possible implementation, the second end cover 140 is arc-shaped. A structure, which is not in the second groove 143, of the second end cover 140 forms a boss. The ratio of a central angle of the boss to a central angle of the first groove is 1:1-1:3. That is to say, the area of the boss 144 on the second end cover 140 accounts for one-quarter to one-half, and the area of the second groove 143 on the second end cover 140 accounts for one-half to three-quarters, so that the second end cover 140 has sufficient area for connecting the first insulating pad 400 and has sufficient area for connecting the second electrode adapter sheet 300.

In some embodiments, the end face of the first input end 210 facing away from the battery cell 120 is flush with the end face of the second input end 310 facing away from the battery cell 120. In this way, the heights of the second input end 310 and the first input end 210 occupying in the battery are partially overlapped, so as to avoid the second input end 310 and the first input end 210 from being high and low to occupy more height of the battery, thereby reducing the overall height of the battery.

To further reduce the overall height of the battery, after the sealing cover 160 is connected to the shell 110, the end face of the sealing cover 160 facing away from the battery cell 120 is located at the same plane as the outer wall of the shell 110, that is, the end face of the position-limiting portion 162 facing away from the accommodation groove 111 is flush with the outer wall of the shell 110. Compared to that the sealing plate protrudes away from the outer wall of the shell 110 in the relevant technology, this arrangement makes the occupation height of the sealing cover 160 overlaps with that of the shell 110 and the sealing cover 160 does not protrude away from the outer wall of the shell 110. So that the sealing cover 160 does not occupy additional height of the battery, thereby reducing the overall height of the battery.

On the other hand, an embodiment of the present application further provides an electronic device. The electronic device includes a battery compartment 700 and the battery as described above. Where, as shown in FIG. 32, in some embodiments, the battery compartment 700 has a mounting groove 710 and a positioning groove 720. The positioning groove 720 is located at an inner side of a groove wall of the mounting groove 710, and the positioning groove 720 extends from a groove opening of the mounting groove 710 to a bottom of the mounting groove 710. The battery is disposed in the mounting groove 710, and at least part of the positioning portion 330 of the battery is located in the positioning groove 720 and is in sliding fit with the groove wall of the positioning groove 720.

Referring to FIGS. 1 and 32, in some embodiments, the battery compartment 700 further includes mounting holes 730 for mounting the first output end 220 and the second output end 320 of the battery. Exemplary, the bottom of the battery compartment 700 has two mounting holes 730. Further optionally, two mounting holes 730 are parallel and disposed spaced apart at the bottom of the battery compartment 700. In particular, the distance between the two mounting holes 730 is equal to the distance between the first output end 220 and the second output end 320. In a case that the battery is assembled into the battery compartment 700, one of the two mounting holes 730 corresponds to the first output end 220 and the other of the two mounting holes 730 corresponds to the second output end 320.

Exemplary, in the process of assembling the battery and battery compartment 700, the positioning portion 330 and the positioning groove 720 can be used for position-limiting fit, the relative position of the battery and battery compartment 700 is limited, so as to ensure that the first output end 220 and the second output end 320 can be mounted to corresponding assembly holes 730. Thus, the alignment difficulty of the first output end 220 and the second output end 320 is reduced, this avoids that the first output end 220 and the second output end 320 cannot be aligned with corresponding assembly holes 730 in the process of mounting the battery to cause the first output end 220 and the second output end 320 to abut against the bottom of the mounting groove 710 and to be fully stressed.

The assembly process of the battery of the present embodiment is illustrated below in brief. First, the second insulating pad 150 is sandwiched between the second end cover 140 and the first end cover 130, and the second end cover 140, the second insulating pad 150 and the first end cover 130 are bonded into an integrated by hot pressing. Then the second insulation layer 240 and the third insulation layer 250 are bonded to two ends of the battery cell 120 respectively. After the assembling, the battery cell 120 is put into the accommodation groove 111. By means of welding, the shell 110 is connected with the battery cell 120, and the battery cell 120 is connected with the first end cover 130. Then the position-limiting groove 141 is matched with the end face of the shell 110, the second end cover 140 is connected with the shell 110 by means of welding. Then an electrolyte is injected into the accommodation groove 111 through the liquid injection hole 112, the position-limiting portion 162 of the sealing cover 160 is inserted into the second hole segment 1122 for positioning, and the cover main body portion 161 of the sealing cover 160 seals the first hole segment 1121. The face of the side of the cover main body portion 161 facing away from the accommodation groove 111 is connected with the outer wall of the shell 110 by means of welding, so as to achieve the packaging of the battery. Then, the first insulating pad 400 is bonded to the second groove 143, the first input end 210 is welded to the second cover body 132, the second input end 310 is welded to the boss 144, and finally the third insulating pad 500 is bonded on the second input end 310 and the first input end 210, and the fourth insulating pad 600 is bonded to the side wall of the shell 110.

After considering the specification and practicing the application disclosed herein, persons of ordinary skill in the art will easily think of other embodiments of the present application. The present application is intended to cover any variation, use or adaptive change of the present application, the variation, use or adaptive change comply with general principles of the present application and include common general knowledge or conventional technical means in the technology field which are not disclosed in the present application. The specifications and embodiments are regarded to be exemplary only, and the true scope and spirit of the present application are indicated by the appended claims.

It should be understood that the present application is not limited to the precise structures described above and shown in the accompanying drawings, and various modifications and changes can be made without departing from scope thereof. The scope of the present application is limited only by the appended claims.

## Claims

1. A battery, comprising a battery body (100), a first electrode adapter sheet (200) and a second electrode adapter sheet (300), the first electrode adapter sheet (200) and the second electrode adapter sheet (300) are disposed spaced apart at a same end of the battery body (100);
the first electrode adapter sheet (200) comprises a first input end (210) and a first output end (220) connected to the first input end (210); the second electrode adapter sheet (300) comprises a second input end (310) and a second output end (320) connected to the second input end (310);
one of the first input end (210) and the second input end (310) is connected to a positive electrode of the battery body (100), and the other of the first input end (210) and the second input end (310) is connected to a negative electrode of the battery body (100); the first output end (220) and the second output end (320) extend to a direction facing away from an end face of the battery body (100).

2. The battery according to claim 1, wherein an extension face of the first output end (220) and an extension face of the second output end (320) are disposed parallel to each other.

3. The battery according to claim 2, wherein an angle between the extension face of the first output end (220) and the first input end (210) is in a range of 80-120°;
and/or, an angle between the extension face of the second output end (320) and the second input end (310) is in a range of 80-120°.

4. The battery according to claim 1, wherein a height of the first output end (220) protruding away from the end face of the battery body (100) is the same as a height of the second output end (320) protruding away from the end face of the battery body (100).

5. The battery according to any one of claims 2 to 4, wherein the second electrode adapter sheet (300) further comprises a positioning portion (330), the positioning portion (330) is connected with at least one of the second input end (310) and the second output end (320), and at least part of the positioning portion (330) protrudes away from a side wall of the battery body (100).

6. The battery according to claim 5, wherein the positioning portion (330) comprises a first sub-portion (331) and a second sub-portion (332), the first sub-portion (331) extends along the side wall of the battery body (100), and a first end of the first sub-portion (331) is connected to the second input end (310) and/or the second output end (320), a second end of the first sub-portion (331) is connected to the second sub-portion (332); the second sub-portion (332) extends to a direction facing away from the side wall of the battery body (100) and protrudes away from the side wall of the battery body (100).

7. The battery according to claim 6, wherein a distance between the second sub-portion (332) and a first end of the battery body (100) is a first distance, a distance between the second sub-portion (332) and a second end of the battery body (100) is a second distance, and the first distance is greater than the second distance.

8. The battery according to claim 5, wherein the first output end (220) and the second output end (320) are spaced and parallelly disposed at the first end of the battery body (100), and a gap between the first output end (220) and the second output end (320) is opposite to the positioning portion (330).

9. The battery according to claim 8, wherein the first output end (220) and the second output end (320) are symmetrically distributed at two sides of a first plane (20) respectively, a symmetric plane of the positioning portion (330) along a radial direction of the battery body (100) is a second plane (10), and an angle between the second plane (10) and the first plane (20) is greater than or equal to 0°, and less than or equal to 10°.

10. The battery according to claim 9, wherein the second plane (10) and the first plane (20) coincide with each other.

11. The battery according to any one of claims 1 to 4, wherein the battery body (100) comprises a shell (110), a battery cell (120), a first end cover (130) and a second end cover (140); the shell (110) has an accommodation groove (111), and the battery cell (120) is disposed in the accommodation groove (111); the first end cover (130) and the second end cover (140) are disposed spaced apart at an end of the battery cell (120) facing away from a bottom of the accommodation groove (111); one of the first end cover (130) and the shell (110) is connected to a positive electrode of the battery cell (120), the other of the first end cover (130) and the shell (110) is connected to a negative electrode of the battery cell (120); and the second end cover (140) is connected to the shell (110);
the first end cover (130) is connected to the first input end (210), and the second end cover (140) is connected to the second input end (310).

12. The battery according to claim 11, further comprising a first insulating pad (400), the first output end (220) is located at a side of the second end cover (140) facing away from the battery cell (120), the first insulating pad (400) is located between the first electrode adapter sheet (200) and the second end cover (140);
or, the second output end (320) is located at a side of the first end cover (130) facing away from the battery cell (120), and the first insulating pad (400) is located between the second output end (320) and the first end cover (130).

13. The battery according to claim 12, wherein the first output end (220) and the second output end (320) are located at the side of the first end cover (130) facing away from the battery cell (120), the side of the first end cover (130) facing away from the battery cell (120) has a first groove, at least part of the first insulating pad (400) is disposed in the first groove, and the second output end (320) is located at a side of the first insulating pad (400) facing away from the battery cell (120);
or, the first output end (220) and the second output end (320) are located at the side of the second end cover (140) facing away from the battery cell (120), the side of the second end cover (140) facing away from the battery cell (120) has a second groove (143), at least part of the first insulating pad (400) is disposed in the second groove (143), and the first output end (220) is located at the side of the first insulating pad (400) facing away from the battery cell (120).

14. The battery according to claim 13, wherein a side face of the first insulating pad (400) facing away from the battery cell (120) is flush with a groove opening of the second groove (143).

15. The battery according to claim 14, wherein the second end cover (140) is arc-shaped; a structure, which is not at the second groove (143), of the second end cover (140) forms a boss (144), and a ratio of a central angle of the boss (144) and a central angle of the second groove (143) is 1:1-1:3.

16. The battery according to claim 15, wherein an end face of the first input end (210) facing away from the battery cell (120) is flush with an end face of the second input end (310) facing away from the battery cell (120).

17. The battery according to claim 12, wherein the first output end (220) and the second output end (320) are located at the side of the first end cover (130) facing away from the battery cell (120); the first electrode adapter sheet (200) further comprises a first bending portion and a first connecting portion (230); the first input end (210) is mounted to be attached to the first end cover (130), the first connecting portion (230) is attached to a side of the first insulating pad (400) facing away from the battery cell (120); a first end of the first connecting portion (230) is connected to the first output end (220), and a second end of the first connecting portion (230) is connected to the first input end (210) through the first bending portion;
or, the first output end (220) and the second output end (320) are located on the side of the second end cover (140) facing away from the battery cell (120); the second electrode adapter sheet (300) further comprises a second bending portion (350) and a second connecting portion (340); the second input end (310) is mounted to be attached to the second end cover (140), the second connecting portion (340) is attached to the side of the first insulating pad (400) facing away from the battery cell (120); a first end of the second connecting portion (340) is connected to the second output end (320), and a second end of the second connecting portion (340) is connected to the second input end (310) through the second bending portion (350).

18. The battery according to claim 17, wherein when the first output end (220) and the second output end (320) are located at the side of the first end cover (130) facing away from the battery cell (120), the first bending portion abuts against the first insulating pad (400);
or, when the first output end (220) and the second output end (320) are located at the side of the second end cover (140) facing away from the battery cell (120), the second bending portion (350) abuts against the first insulating pad (400).

19. The battery according to claim 12, wherein a projection of the first output end (220) in a thickness direction is located within the first insulating pad (400);
and/or, a projection of the second output end (320) in a thickness direction is located within the first insulating pad (400).

20. The battery according to claim 17, wherein the first output end (220) is located at the side of the second end cover (140) facing away from the battery cell (120); at last part of the side of the first end cover (130) facing away from the battery cell (120) protrudes away from a side face of the second end cover (140) facing away from the battery cell (120), and is flush with the side of the first insulating pad (400) facing away from the second end cover (140);
or, the second output end (320) is located at the side of the first end cover (130) facing away from the battery cell (120); at last part of the side of the second end cover (140) facing away from the battery cell (120) protrudes away from a side face of the first end cover (130) facing away from the battery cell (120), and is flush with the side, facing away from the first end cover (130), of the first insulating pad (400) on the first end cover (130).

21. The battery according to claim 11, wherein the second end cover (140) has a position-limiting groove (141), the position-limiting groove (141) is located at a side of the second end cover (140) near the battery cell (120),
at least part of the shell (110) is located in the position-limiting groove (141) and is in position-limiting fit with the second end cover (140).

22. The battery according to claim 11, wherein the battery body (100) further comprises a second insulating pad (150), the second insulating pad (150) and the second end cover (140) are provided with avoidance holes (142) respectively, the second insulating pad (150) is stacked at the side of the second end cover (140) near the battery cell (120),
the first end cover (130) comprises a first cover body portion (131) and a second cover body portion (132) connected to the first cover body portion (131), and the first cover body portion (131) is stacked at a side of the second insulating pad (150) facing away from the second end cover (140);
the second cover body portion (132) is located at a side of the first cover body portion (131) facing away from the battery cell (120); the second cover body portion (132) passes through the second insulating pad (150) and the second end cover (140) along the avoidance holes (142) of the second insulating pad (150) and the second end cover (140), so as to be connected to the first input end (210).

23. The battery according to claim 11, wherein the battery body (100) further comprises a sealing cover (160), the shell (110) is provided with a liquid injection hole (112), the liquid injection hole (112) is communicated with the accommodation groove (111), the sealing cover (160) seals the liquid injection hole (112), an end face of the sealing cover (160) facing away from the accommodation groove (111) is flush with an outer wall of the shell (110).

24. The battery according to claim 23, wherein the sealing cover (160) comprises a cover main body portion (161) and a position-limiting portion (162); the liquid injection hole (112) comprises a first hole segment (1121) and a second hole segment (1122) connected to the first hole segment (1121); the first hole segment (1121) is located at an end of the second hole segment (1122) facing away from the accommodation groove (111), and a hole diameter of the first hole segment (1121) is greater than a hole diameter of the second hole segment (1122);
the cover main body portion (161) is plugged into the first hole segment (1121), and the position-limiting portion (162) is plugged into the second hole segment (1122).

25. The battery according to any one of claims 1 to 4, further comprising a third insulating pad (500), the third insulating pad (500) is stacked at a side of the first electrode adapter sheet (200) and/or the second electrode adapter sheet (300) facing away from the battery body (100).

26. An electronic device, comprising a battery compartment and the battery according to any one of claims 1 to 25, the battery compartment has an accommodation space and an opening, the opening is communicated with the accommodation space, the battery is disposed in the accommodation space, and an end of the battery facing away from the first output end (220) and the second output end (320) is opposite to the opening.
